# EUROPEAN PATENT SPECIFICATION

(11) **EP 2 448 308 B1**
(45) Date of publication and mention of the grant of the patent: **30.04.2014**
(21) Application number: 10791521.7
(22) Date of filing: 22.06.2010
(51) Int. Cl.: H04W 72/12

(54) **METHOD, DEVICE AND COMMUNICATION SYSTEM FOR SCHEDULING UPLINK RESOURCES**
VERFAHREN, VORRICHTUNG UND KOMMUNIKATIONSSYSTEM ZUR PLANUNG VON UPLINK-RESSOURCEN
PROCÉDÉ, DISPOSITIF ET SYSTÈME DE COMMUNICATION POUR PROGRAMMATION DE RESSOURCES DE LIAISON MONTANTE

(30) Priority: 25.06.2009 CN 200910087919
(43) Date of publication of application: 02.05.2012
(60) Divisional application: 14151935.5
(73) Proprietor: Huawei Technologies Co., Ltd., Shenzhen, Guangdong 518129 (CN)
(72) Inventor: FANG, Ming, Shenzhen Guangdong 518129 (CN); ZHAO, Yang, Shenzhen Guangdong 518129 (CN)
(74) Representative: Epping - Hermann - Fischer
(86) International application number: PCT/CN2010/074199
(87) International publication number: WO 2010/149015

(56) References cited:
- CN-A- 101 047 426
- CN-A- 101 047 884
- CN-A- 101 203 020
- US-A1- 2008 259 880
- RESEARCH IN MOTION UK LTD: "A Mixed TTI TBF Configuration for Latency Reduction 1", 3GPP DRAFT; GP-081270_MIXEDTTT_TBF_CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Florence; 20080825, 26 August 2008 (2008-08-26), XP050413725, [retrieved on 2008-08-26]
- RESEARCH IN MOTION UK LTD: "Multiple TTI TBF messages", 3GPP DRAFT; GP-090770_CR44060-840_MESSAGES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Shenzhen; 20090511, 6 May 2009 (2009-05-06), XP050414912, [retrieved on 2009-05-06]

## Description

### FIELD OF THE INVENTION

The present invention relates to communication technologies, and in particular, to an uplink resource scheduling method and device, and a communication system.

### BACKGROUND OF THE INVENTION

In a communication system, a temporary block flow (Temporary Block Flow, TBF) is a temporary connection established between a mobile station (Mobile Station, MS) and a network side, and only exists in a data forwarding process. The TBF supports unidirectional forwarding of a logical link control (Logical Link Control, LLC) packet data unit on a packet physical channel. A time division multiple access (Time Division Multiple Access, TDMA) frame in a circuit switched domain is divided into 8 time slots. The same time slots of each TDMA frame allocated by the network side to a general packet radio service (General Packet Radio Service, GPRS) are called packet data channels (Packet Data Channels, PDCHs). The TBF allocated by the network side to the MS is equivalent to one or more currently available PDCHs allocated to the MS. Specifically, the network side allocates radio resources in a unit of the PDCH. When the MS has a multi-slot capability, the network side may allocate one or more uplink PDCHs to the MS, and indicate to the MS the currently available one or more PDCHs through an uplink state flag (Uplink State Flag, USF). Each PDCH corresponds to a different MS, which has a different USF value, and the network side determines the MS that uses the uplink PDCH by controlling the USF. The network side may also enable multiple MSs to use the same PDCH in a multiplex manner by controlling the USF, thereby realizing dynamic allocation of uplink resources.

The smallest unit of scheduling in data transmission at a physical layer is a radio block, where upper-layer data is encapsulated into the radio block, and is transmitted through the PDCH. The introduction of the reduced transmission timing interval (Reduced Transmission Timing Interval, RTTI) technology aims to shorten a transmission delay of the radio block of the TBF. Before the

RTTI technology is introduced, a transmission timing interval (Transmission Timing Interval, TTI) of the radio block of the TBF is 20 ms, where the TTI with a time length of 20 ms is called a basic transmission timing interval (Basic TTI, BTTI); the TBF is called a BTTI TBF correspondingly; and the radio block with the transmission delay of the BTTI (20 ms) is called a BTTI radio block. After the RTTI technology is introduced, the TTI of the radio block of the TBF is shortened to 10 ms, where the TTI with the time length of 10 ms is called an RTTI; the TBF is called an RTTI TBF correspondingly; and the radio block with the transmission delay of the RTTI (10 ms) is called an RTTI radio block.

In terms of the resource scheduling of the uplink RTTI TBF, the prior art has two compatible modes: a BTTI USF mode and an RTTI USF mode. In the BTTI USF mode, the uplink resource scheduling is performed with a scheduling period of the BTTI (20 ms); the RTTI radio block may be scheduled; and the BTTI radio block may also be scheduled. In the RTTI USF mode, the uplink resource scheduling is performed with a scheduling period of the RTTI (10 ms), and only the RTTI radio block may be scheduled.

During the implementation of the present invention, the inventor finds that in the conventional RTTI technology, one TBF has one TTI, that is, the RTTI or the BTTI. An uplink resource scheduling method in one USF mode is available to one uplink TBF at any time. That is, either an RTTI radio block or a BTTI radio block is scheduled throughout. In the RTTI technology, the sum of the number of time slots for receiving and sending data that the MS is allowed to use is always even. If the sum of the number of the time slots for receiving and sending data supported by the MS is odd, the conventional RTTI technology cannot utilize the maximum receiving and sending capability of the MS, resulting in a waste of part of the receiving and sending function. For example, a sum of the number of time slots for receiving and sending supported by a certain MS is 5, and if an RTTI configuration is used, the network assigns two uplink time slots and two downlink time slots to the MS respectively. In this way, the sum of the number of the time slots for receiving and sending is 4, which does not reach the upper limit of 5, thereby wasting the uplink sending capability of the MS, and in fact limiting the uplink bandwidth.

3GPP TSG GERAN #39 discloses a mixed TTI TBF configuration for latency reduction.

3GPP GP-090770 discloses multiple TTI TBF messages.

US 2008/0259880 (A1) discloses a method of allocating uplink radio resources to a mobile device, in which uplink and downlink timeslots are allocated, and the sum of the allocated uplink timeslots and the allocated downlink timeslots within a predetermined period is less than the total number of assigned time slots and does not exceed a predetermined maximum. The resources are allocated in a reduced transmission time interval configuration, in which an indication of the uplink timeslot allocation is received from the network in a downlink timeslot, or downlink timeslot pair, directing the mobile device to transmit only in one uplink timeslot pair.

### SUMMARY OF THE INVENTION

Embodiments of the present invention provide an uplink resource scheduling method and device, and a communication system.

In one aspect, an embodiment of the present invention provides an uplink resource scheduling method, which includes: receiving uplink single temporary block flow TBF resource assignment information sent by a network side, where the uplink single TBF resource assignment information includes information of an uplink time slot allocated by the network side to a mobile station, and an uplink state flag USF corresponding to the uplink time slot, and the information of the uplink time slot includes information of at least one uplink reduced transmission timing interval RTTI time slot pair and information of at least one uplink basic transmission timing interval BTTI time slot; and sending at least one of an uplink BTTI radio block and an uplink RTTI radio block on the uplink time slot corresponding to the detected USF, or on a part or all of uplink time slots with sequence numbers equal to or greater than that of the corresponding uplink time slot, when the USF is detected on a downlink time slot corresponding to the uplink time slot; wherein the downlink time slot is a downlink BTTI time slot corresponding to the uplink BTTI time slot; type of the USF comprises a BTTI USF; one BTTI USF corresponds to one uplink RTTI time slot pair or one uplink BTTI time slot; wherein the monitoring the USF on the downlink time slot corresponding to the uplink time slot comprises: monitoring the BTTI USF on a downlink BTTI time slot corresponding to the uplink BTTI time slot; and wherein the sending the at least one of the uplink BTTI radio block and the uplink RTTI radio block on the part or all of the uplink time slots with sequence numbers equal to or greater than that of the corresponding uplink time slot when the USF is detected on the downlink time slot corresponding to the uplink time slot comprises: if the BTTI USF is detected on the downlink BTTI time slot corresponding to the uplink BTTI time slot, sending the BTTI radio block on the uplink BTTI time slot corresponding to the detected BTTI USF and subsequent uplink BTTI time slots and sending the RTTI radio block on an uplink RTTI time slot pair with a sequence number greater than that of the corresponding uplink BTTI time slot, wherein the BTTI radio block and the RTTI radio block are sent in the next 20 ms of a current period when the BTTI USF is received; wherein the sending the at least one of the uplink BTTI radio block and the uplink RTTI radio block on the part or all of the uplink time slots with sequence numbers equal to or greater than that of the corresponding uplink time slot when the USF is detected on the downlink time slot corresponding to the uplink time slot comprises at least one of the following: if the BTTI USF is detected on the time slot with the lower sequence number in the downlink RTTI time slot pair corresponding to the uplink RTTI time slot pair, sending the RTTI radio block on the uplink RTTI time slot pair corresponding to the detected BTTI USF and subsequent uplink RTTI time slot pairs, and sending the BTTI radio block on subsequent uplink BTTI time slots with sequence numbers greater than that of the time slot with the lower sequence number in the corresponding uplink RTTI time slot pair, wherein the RTTI radio block is sent in the first 10 ms of the next 20 ms of a current period when the BTTI USF is received, and the BTTI radio block is sent in the next 20 ms of the current period; and if the BTTI USF is detected on the time slot with the higher sequence number in the downlink RTTI time slot pair corresponding to the uplink RTTI time slot pair, sending the RTTI radio block on the uplink RTTI time slot pair corresponding to the detected BTTI USF and subsequent uplink RTTI time slot pairs, and sending the BTTI radio block on subsequent uplink BTTI time slots with sequence numbers greater than that of the time slot with the lower sequence number in the corresponding uplink RTTI time slot pair, wherein the RTTI radio block is sent in the last 10 ms of the next 20 ms of a current period when the BTTI USF is received, and the BTTI radio block is sent in the next 20 ms of the current period.

In another aspect, an embodiment of the present invention provides another uplink resource scheduling method, which includes: generating uplink single temporary block flow TBF resource assignment information and sending the uplink single TBF resource assignment information to a mobile station, where the uplink single TBF resource assignment information includes information of an uplink time slot allocated by a network side to the mobile station, and an uplink state flag USF corresponding to the uplink time slot, and the information of the uplink time slot includes information of at least one uplink reduced transmission timing interval RTTI time slot pair and information of at least one uplink basic transmission timing interval BTTI time slot; and sending the USF on a downlink time slot corresponding to the uplink time slot, so as to notify the mobile station of sending at least one of an uplink BTTI radio block and an uplink RTTI radio block on the uplink time slot corresponding to the detected USF, or on a part or all of uplink time slots with sequence numbers equal to or greater than that of the corresponding uplink time slot, when the USF is detected on the downlink time slot corresponding to the uplink time slot; wherein the downlink time slot is a downlink BTTI time slot corresponding to the uplink BTTI time slot; type of the USF comprises a BTTI USF; one BTTI USF corresponds to one uplink RTTI time slot pair or one uplink BTTI time slot; wherein the sending the USF on the downlink time slot corresponding to the uplink time slot comprises: sending the BTTI USF on a downlink BTTI time slot corresponding to the uplink BTTI time slot; and wherein the method further comprises: if the BTTI USF is detected on the downlink BTTI time slot corresponding to the uplink BTTI time slot, receiving the BTTI radio block on the uplink BTTI time slot corresponding to the detected BTTI USF and subsequent uplink BTTI time slots and receiving the RTTI radio block on an uplink RTTI time slot pair with a sequence number greater than that of the corresponding uplink BTTI time slot, wherein the BTTI radio block and the RTTI radio block are sent in the next 20 ms of a current period when the BTTI USF is received by the mobile station; wherein, the method further comprises at least one of the following: if the BTTI USF is detected on the time slot with the lower sequence number in the downlink RTTI time slot pair corresponding to the uplink RTTI time slot pair, receving the RTTI radio block on the uplink RTTI time slot pair corresponding to the detected BTTI USF and subsequent uplink RTTI time slot pairs, and receving the BTTI radio block on subsequent uplink BTTI time slots with sequence numbers greater than that of the time slot with the lower sequence number in the corresponding uplink RTTI time slot pair, wherein the RTTI radio block is sent in the first 10 ms of the next 20 ms of a current period when the BTTI USF is received, and the BTTI radio block is sent in the next 20 ms of the current period; and if the BTTI USF is detected on the time slot with the higher sequence number in the downlink RTTI time slot pair corresponding to the uplink RTTI time slot pair, receving the RTTI radio block on the uplink RTTI time slot pair corresponding to the detected BTTI USF and subsequent uplink RTTI time slot pairs, and receving the BTTI radio block on subsequent uplink BTTI time slots with sequence numbers greater than that of the time slot with the lower sequence number in the corresponding uplink RTTI time slot pair, wherein the RTTI radio block is sent in the last 10 ms of the next 20 ms of a current period when the BTTI USF is received, and the BTTI radio block is sent in the next 20 ms of the current period.

In still another aspect, an embodiment of the present invention further provides a mobile station, which includes: an assignment information receiving module, configured to receive uplink single temporary block flow TBF resource assignment information sent by a network side, where the uplink single TBF resource assignment information includes information of an uplink time slot allocated by the network side to the mobile station, and an uplink state flag USF corresponding to the uplink time slot, and the information of the uplink time slot includes information of at least one uplink reduced transmission timing interval RTTI time slot pair and information of at least one uplink basic transmission timing interval BTTI time slot; and a processing module, configured tosend at least one of an uplink BTTI radio block and an uplink RTTI radio block on the uplink time slot corresponding to the detected USF, or on a part or all of uplink time slots with sequence numbers equal to or greater than that of the corresponding uplink time slot, when the USF is detected on a downlink time slot corresponding to the uplink time slot; wherein the downlink time slot is a downlink BTTI time slot corresponding to the uplink BTTI time slot; type of the USF comprises a BTTI USF; one BTTI USF corresponds to one uplink RTTI time slot pair or one uplink BTTI time slot; wherein the processing module is further configured to monitor the BTTI USF on a downlink BTTI time slot corresponding to the uplink BTTI time slot; and the processing module is further configured to, if the BTTI USF is detected on the downlink BTTI time slot corresponding to the uplink BTTI time slot, send the BTTI radio block on the uplink BTTI time slot corresponding to the detected BTTI USF and subsequent uplink BTTI time slots and send the RTTI radio block on an uplink RTTI time slot pair with a sequence number greater than that of the corresponding uplink BTTI time slot, wherein the BTTI radio block and the RTTI radio block are sent in the next 20 ms of a current period when the BTTI USF is received; wherein the processing module (152) is further configured to perform at least one of the following: if the BTTI USF is detected on the time slot with the lower sequence number in the downlink RTTI time slot pair corresponding to the uplink RTTI time slot pair, sending the RTTI radio block on the uplink RTTI time slot pair corresponding to the detected BTTI USF and subsequent uplink RTTI time slot pairs, and sending the BTTI radio block on subsequent uplink BTTI time slots with sequence numbers greater than that of the time slot with the lower sequence number in the corresponding uplink RTTI time slot pair, wherein the RTTI radio block is sent in the first 10 ms of the next 20 ms of a current period when the BTTI USF is received, and the BTTI radio block is sent in the next 20 ms of the current period; and if the BTTI USF is detected on the time slot with the higher sequence number in the downlink RTTI time slot pair corresponding to the uplink RTTI time slot pair, sending the RTTI radio block on the uplink RTTI time slot pair corresponding to the detected BTTI USF and subsequent uplink RTTI time slot pairs, and sending the BTTI radio block on subsequent uplink BTTI time slots with sequence numbers greater than that of the time slot with the lower sequence number in the corresponding uplink RTTI time slot pair, wherein the RTTI radio block is sent in the last 10 ms of the next 20 ms of a current period when the BTTI USF is received, and the BTTI radio block is sent in the next 20 ms of the current period.

In still another aspect, an embodiment of the present invention further provides a network side equipment, which includes: an assignment information generating and sending module, configured to generate uplink single temporary block flow TBF resource assignment information and send the uplink single TBF resource assignment information to a mobile station, where the uplink single TBF resource assignment information includes information of an uplink time slot allocated by a network side to the mobile station, and an uplink state flag USF corresponding to the uplink time slot, and the information of the uplink time slot includes information of at least one uplink reduced transmission timing interval RTTI time slot pair and information of at least one uplink basic transmission timing interval BTTI time slot; and a scheduling module, configured to send the USF on a downlink time slot corresponding to the uplink time slot, so as to notify the mobile station of sending at least one of an uplink BTTI radio block and an uplink RTTI radio block on the uplink time slot corresponding to the detected USF, or on a part or all of uplink time slots with sequence numbers equal to or greater than that of the corresponding uplink time slot, when the USF is detected on the downlink time slot corresponding to the uplink time slot; wherein the downlink time slot is a downlink BTTI time slot corresponding to the uplink BTTI time slot; type of the USF comprises a BTTI USF; one BTTI USF corresponds to one uplink RTTI time slot pair or one uplink BTTI time slot; wherein the scheduling module is further configured to send the BTTI USF on a downlink BTTI time slot corresponding to the uplink BTTI time slot; wherein the scheduling module is further configured to, if the BTTI USF is detected on the downlink BTTI time slot corresponding to the uplink BTTI time slot, receive the BTTI radio block on the uplink BTTI time slot corresponding to the detected BTTI USF and subsequent uplink BTTI time slots and receive the RTTI radio block on an uplink RTTI time slot pair with a sequence number greater than that of the corresponding uplink BTTI time slot, wherein the BTTI radio block and the RTTI radio block are sent in the next 20 ms of a current period when the BTTI USF is received by the mobile station; wherein the scheduling module (162) is further configured to perform at least one of the following: if the BTTI USF is detected on the time slot with the lower sequence number in the downlink RTTI time slot pair corresponding to the uplink RTTI time slot pair, receving the RTTI radio block on the uplink RTTI time slot pair corresponding to the detected BTTI USF and subsequent uplink RTTI time slot pairs, and receving the BTTI radio block on subsequent uplink BTTI time slots with sequence numbers greater than that of the time slot with the lower sequence number in the corresponding uplink RTTI time slot pair, wherein the RTTI radio block is sent in the first 10 ms of the next 20 ms of a current period when the BTTI USF is received, and the BTTI radio block is sent in the next 20 ms of the current period; and if the BTTI USF is detected on the time slot with the higher sequence number in the downlink RTTI time slot pair corresponding to the uplink RTTI time slot pair, receving the RTTI radio block on the uplink RTTI time slot pair corresponding to the detected BTTI USF and subsequent uplink RTTI time slot pairs, and receving the BTTI radio block on subsequent uplink BTTI time slots with sequence numbers greater than that of the time slot with the lower sequence number in the corresponding uplink RTTI time slot pair, wherein the RTTI radio block is sent in the last 10 ms of the next 20 ms of a current period when the BTTI USF is received, and the BTTI radio block is sent in the next 20 ms of the current period.

In the embodiments of the present invention, through mixed scheduling of an uplink BTTI time slot and an uplink RTTI time slot pair of an MTTI TBF, not only a BTTI block but also an RTTI block may be sent in one TBF, thereby improving the flexibility of uplink resource scheduling.

### BRIEF DESCRIPTION OF THE DRAWINGS

To illustrate the technical solutions in the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art may derive other drawings according to these accompanying drawings without creative efforts.
FIG 1 is a flow chart of an uplink resource scheduling method according to Example 1;
FIG 2 is a schematic structure diagram of a BTTI radio block and an RTTI radio block in an application scenario of the present invention;
FIG 3 is a flow chart of an uplink resource scheduling method according to Example 2;
FIG 4 is a schematic diagram of a radio block allocation operation of an MTTI TBF during DA uplink scheduling in a BTTI USF mode according to Embodiment 3 of the present invention;
FIG 5 is a first schematic diagram of a radio block allocation operation of an MTTI TBF during DA uplink scheduling in an RTTI USF mode according to Example 4;
FIG 6 is a second schematic diagram of the radio block allocation operation of the MTTI TBF during DA uplink scheduling in an RTTI USF mode according to Example 4;
FIG 7 is a schematic diagram of a radio block allocation operation of an MTTI TBF during DA uplink scheduling in a dual USF mode according to Example 5;
FIGs. 8a to 8e are first schematic diagrams of a radio block allocation operation of an MTTI TBF during EDA uplink scheduling in a BTTI USF mode according to Embodiment 6 of the present invention;
FIGs. 9a to 9e are second schematic diagrams of the radio block allocation operation of the MTTI TBF during EDA uplink scheduling in a BTTI USF mode according to Embodiment 6 of the present invention;
FIGs. 10a to 10e are third schematic diagrams of the radio block allocation operation of the MTTI TBF during EDA uplink scheduling in a BTTI USF mode according to Embodiment 6 of the present invention;
FIGs. 11 a to 11e are fourth schematic diagrams of the radio block allocation operation of the MTTI TBF during EDA uplink scheduling in a BTTI USF mode according to Embodiment 6 of the present invention;
FIGs. 12a to 12b are schematic diagrams of a radio block allocation operation of an MTTI TBF during EDA uplink scheduling in an RTTI USF mode according to Example 7;
FIGs. 13a to 13c are first schematic diagrams of a radio block allocation operation of an MTTI TBF during EDA uplink scheduling in a dual USF mode according to Example 8;
FIGs. 14a to 14c are second schematic diagrams of the radio block allocation operation of the MTTI TBF during EDA uplink scheduling in a dual USF mode according to Example 8;
FIG 15 is a schematic structure diagram of a mobile station according to Example 9;
FIG 16 is a schematic structure diagram of a network side equipment according to Example 10; and
FIG. 17 is a schematic structure diagram of a communication system according to Example 11.

### DETAILED DESCRIPTION OF THE EMBODIMENTS

The technical solutions in the present invention are clearly and completely described in the following with reference to the accompanying drawings. Apparently, the embodiments to be described are only a part rather than all of the embodiments of the present invention. All other embodiments obtained by persons of ordinary skill in the art based on the embodiments of the present invention without creative efforts shall fall within the protection scope of the present invention, as defined by the claims.

### Example 1: Implementing Uplink Scheduling of MTTI TBF by Mobile Station

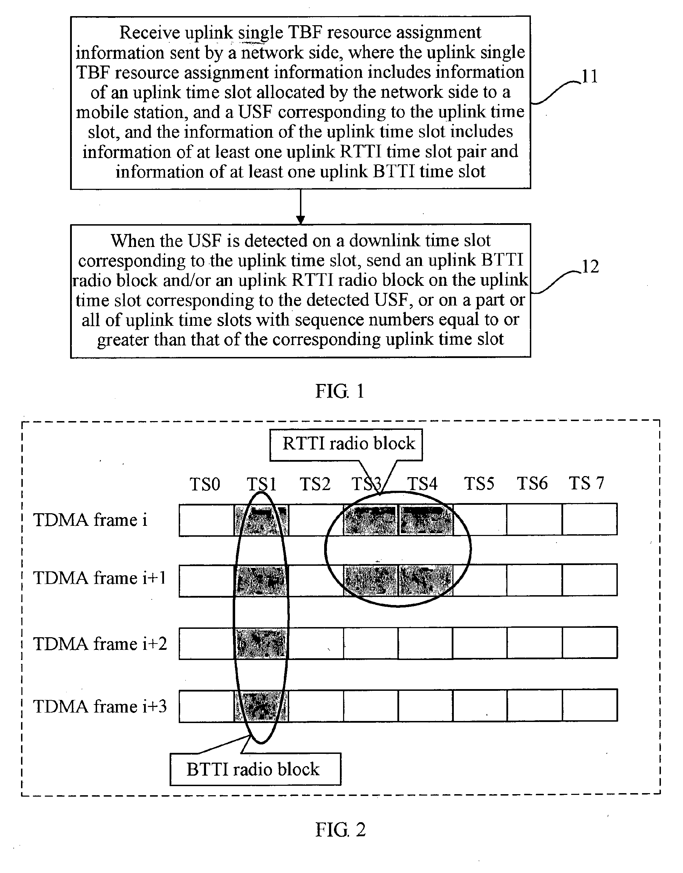

FIG 1 is a flow chart of an uplink resource scheduling method according to Embodiment 1 of the present invention. In this embodiment, the technical solution of implementing uplink resource scheduling is illustrated from the perspective of a mobile station. As shown in FIG 1, the uplink resource scheduling method in this example includes the following sections.

11: Uplink single temporary block flow (TBF) resource assignment information sent by a network side is received, where the uplink single TBF resource assignment information includes information of an uplink time slot allocated by the network side to a mobile station, and an uplink state flag (USF) corresponding to the uplink time slot. The information of the uplink time slot includes information of at least one uplink reduced transmission timing interval (RTTI) time slot pair and information of at least one uplink basic transmission timing interval (BTTI) time slot.

FIG 2 is a schematic structure diagram of a BTTI radio block and an RTTI radio block in an application scenario of the present invention. As shown in FIG 2, the BTTI radio block is formed by four time slots of the same sequence number, and the four time slots are respectively located in four consecutive TDMA frames. For example, one BTTI radio block is formed by four time slots with a sequence number of 1 (that is, four time slots 1), and the four time slots 1 are respectively located in a TDMA frame i, a TDMA frame i+1, a TDMA frame i+2, and a TDMA frame i+3. An RTTI radio block is formed by two identical time slot pairs. The two time slot pairs include two time slots of consecutive or inconsecutive sequence numbers, and the two time slot pairs are respectively located in two consecutive TDMA frames. For example, one RTTI radio block is formed by two time slot pairs that include two time slots 3 and two time slots 4. Each of the time slot pairs includes one time slot 3 and one time slot 4. One of the time slot pairs is located in the TDMA frame i, and the other is located in the TDMA frame i+1.

In the embodiment of the present invention, the MTTI means that one TBF has not only an uplink RTTI time slot pair but also an uplink BTTI time slot in an uplink direction, or one TBF has not only a downlink RTTI time slot pair but also a downlink BTTI time slot in a downlink direction. One MTTI TBF has two kinds of TTI blocks (an RTTI radio block and a BTTI radio block). For one MTTI TBF, an RTTI radio block may be sent on one or more RTTI time slot pairs, or a BTTI radio block may be sent on one or more BTTI time slots.

12: when the USF is detected on a downlink time slot corresponding to the uplink time slot, an uplink BTTI radio block and/or an uplink RTTI radio block are sent on the uplink time slot corresponding to the detected USF, or on a part or all of uplink time slots with sequence numbers equal to or greater than that of the corresponding uplink time slot.

For example, an application scenario where a mobile station monitors a USF allocated by the network side to the mobile station on a downlink time slot corresponding to an uplink time slot is as follows. For the same uplink time slot, the uplink time slot configured by the network side for different mobile stations corresponds to different USFs. For example, the USF of an uplink time slot 1 configured for a mobile station A is 1, while the USF of the uplink time slot 1 configured for a mobile station B is 2. The mobile station A receives data on a downlink time slot 1 corresponding to the uplink time slot 1. If the value of the USF received by the mobile station A on the downlink time slot 1 is 2, the mobile station A discards the received USF. If the value of the USF received by the mobile station A on the downlink time slot 1 is 1, it indicates that the mobile station A detects the USF corresponding to the uplink time slot allocated by the network side to the mobile station A for use. The mobile station A may send an uplink radio block on the uplink time slot 1 corresponding to the detected USF.

In step 12, the types of the USF include a BTTI USF and an RTTI USF. The MS may monitor a BTTI USF through a downlink time slot, and monitor an RTTI USF through a downlink time slot pair.

The downlink time slot is a time slot with a lower sequence number, a time slot with a higher sequence number, or all time slots in a downlink RTTI time slot pair corresponding to the uplink RTTI time slot pair; or a downlink BTTI time slot corresponding to the uplink BTTI time slot. The types of the USF include a BTTI USF and an RTTI USF. One BTTI USF corresponds to one uplink RTTI time slot pair or one uplink BTTI time slot; and one RTTI USF corresponds to one uplink RTTI time slot pair or one uplink BTTI time slot. The mobile station may monitor a BTTI USF on a time slot in a downlink RTTI time slot pair corresponding to an uplink RTTI time slot pair, and/or monitor a BTTI USF on a downlink BTTI time slot corresponding to an uplink BTTI time slot, and/or monitor an RTTI USF on a downlink RTTI time slot pair corresponding to an uplink RTTI time slot pair or an uplink BTTI time slot.

The mobile station and the network side may use one USF mode (a single mode, for example, a BTTI USF mode or an RTTI USF mode) or two USF modes (a dual mode, that is, a BTTI USF mode and an RTTI USF mode) to perform uplink resource scheduling for the MTTI TBF according to actual needs, so that not only a BTTI block but also an RTTI block may be sent in one TBF, thereby improving the flexibility of uplink resource scheduling.

### Example 2: Implementing Uplink Scheduling of MTTI TBF by Network Side

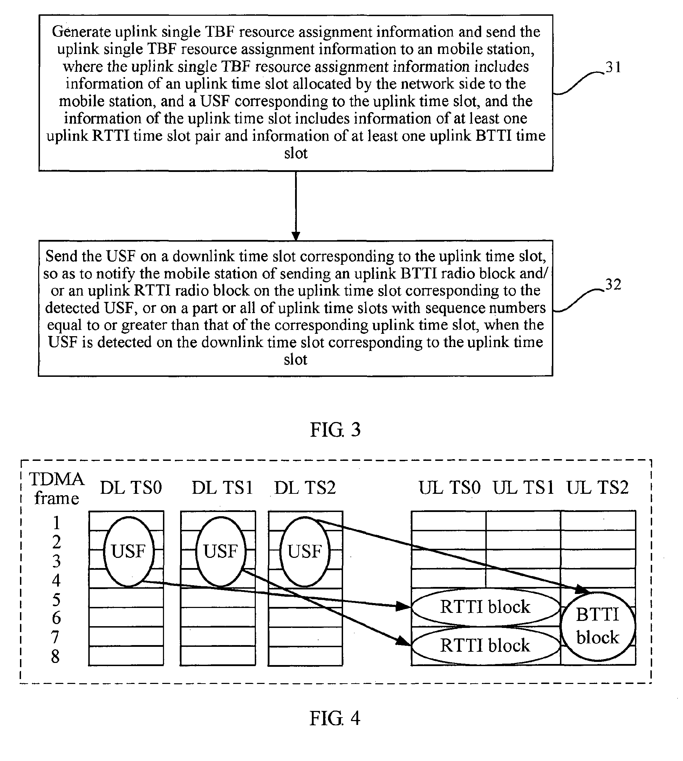

FIG 3 is a flow chart of an uplink resource scheduling method according to Example 2. In this example, the technical solution of implementing uplink resource scheduling is illustrated from the perspective of a network side. The uplink resource scheduling method in this example includes the following sections.

31: Uplink single TBF resource assignment information is generated and sent to a mobile station, where the uplink single TBF resource assignment information includes information of an uplink time slot allocated by the network side to the mobile station, and a USF corresponding to the uplink time slot. The information of the uplink time slot includes information of at least one uplink RTTI time slot pair and information of at least one uplink BTTI time slot.

32: The USF is sent on a downlink time slot corresponding to the uplink time slot, so as to notify the mobile station of sending an uplink BTTI radio block and/or an uplink RTTI radio block on the uplink time slot corresponding to the detected USF, or on a part or all of uplink time slots with sequence numbers equal to or greater than that of the corresponding uplink time slot, when the USF is detected on the downlink time slot corresponding to the uplink time slot.

The downlink time slot is a time slot with a lower sequence number, a time slot with a higher sequence number, or all time slots in a downlink RTTI time slot pair corresponding to the uplink RTTI time slot pair; or a downlink BTTI time slot corresponding to the uplink BTTI time slot. The types of the USF include a BTTI USF and an RTTI USF. One BTTI USF corresponds to one uplink RTTI time slot pair or one uplink BTTI time slot; and one RTTI USF corresponds to one uplink RTTI time slot pair or one uplink BTTI time slot. The network side may send a BTTI USF on a time slot in a downlink RTTI time slot pair corresponding to an uplink RTTI time slot pair, and/or send a BTTI USF on a downlink BTTI time slot corresponding to an uplink BTTI time slot, and/or send an RTTI USF on a downlink RTTI time slot pair corresponding to an uplink RTTI time slot pair or an uplink BTTI time slot.

In this example, through mixed scheduling of the uplink BTTI time slot and the uplink RTTI time slot pair of the MTTI TBF, not only a BTTI block but also an RTTI block may be sent in one TBF, thereby improving the flexibility of uplink resource scheduling.

Methods for allocating uplink resources include: a dynamic allocation (Dynamic Allocation, DA for short) and an extended dynamic allocation (Extended Dynamic Allocation, EDA for short). In order to implement uplink dynamic scheduling, an uplink scheduling method still using a single TTI USF (a single USF mode) and an uplink scheduling method using two kinds of TTI USFs (a dual USF mode) are proposed for the MTTI TBF. The implementation of MTTI TBF scheduling based on DA or EDA in a single USF mode or a dual USF mode is taken as an example in the following for illustration. The following examples are only for illustrating the technical solutions of the present invention, and the embodiments of the present invention are not limited to allocation of uplink resources by DA or EDA. In the following examples of the present invention, a USF sent through one downlink time slot is a BTTI USF, and a USF sent through a pair of downlink time slots is an RTTI USF, which are not repeated again

If the network side allocates uplink resources by DA, each MS is required to monitor a different downlink time slot corresponding to each uplink time slot allocated by the network side to the MS. When the MS receives a USF corresponding to the MS on the downlink time slot, the MS may send uplink data in a next radio block period corresponding to an uplink PDCH. If the network side allocates multiple uplink time slots to a certain MS, the MS has to receive a corresponding

USF on a downlink time slot corresponding to each of the uplink time slots to determine which uplink time slot is to be used to send uplink data. The following Examples and Embodiments 3 to 5 are examples or embodiments in which an MTTI TBF is scheduled by DA for example. Embodiment 3 is an embodiment in which DA scheduling is performed on an MTTI TBF in a single BTTI USF mode, Example 4 is an example in which DA scheduling is performed on an MTTI TBF in a single RTTI USF mode, and Example 5 is an embodiment in which DA scheduling is performed on an MTTI TBF in a dual USF mode.

### Embodiment 3: DA Uplink Scheduling of MTTI TBF in BTTI USF Mode

FIG 4 is a schematic diagram of a radio block allocation operation of an MTTI TBF during DA uplink scheduling in a BTTI USF mode according to Embodiment 3 of the present invention.

If MTTI TBF assignment information received by an MS indicates that a single BTTI USF mode is used, for example, two USFs are used for indicating each RTTI time slot pair, it means that the current scheduling mode of the MTTI TBF is a BTTI USF mode. In the BTTI USF mode, uplink resource scheduling is performed with a scheduling period of a BTTI (20 ms). Therefore, in the BTTI USF mode, both the scheduling periods of a BTTI radio block and an RTTI radio block are 20 ms.

If the MS detects a corresponding USF on a time slot with a lower sequence number in a downlink RTTI time slot pair corresponding to an uplink RTTI time slot pair, the MS may send an RTTI radio block in the first 10 ms of a next BTTI radio block period (20 ms). For example, if the MS detects a USF corresponding to the MS on DL TS0, the MS may send an RTTI radio block on an uplink time slot pair (UL TS0, UL TS1) in the first 10 ms of next 20 ms. If the MS detects a corresponding USF on a time slot with a higher sequence number in a downlink RTTI time slot pair corresponding to an uplink RTTI time slot pair, the MS may send an RTTI radio block in the last 10 ms of a next BTTI radio block period (20 ms). For example, if an MS detects a USF corresponding to the MS on DL TS1, the MS may send an RTTI radio block on an uplink TS pair (UL TS0, UL TS1) in the last 10 ms of next 20 ms.

If the MS detects a corresponding USF on a downlink BTTI time slot corresponding to an uplink BTTI time slot, the MS may send a BTTI radio block in a next BTTI radio block period (20 ms). For example, if the MS detects a USF corresponding to the MS on DL TS2, the MS may send a BTTI radio block on UL TS3 in next 20 ms.

In this embodiment, the scheduling of uplink single TBF resources required by the BTTI block and the RTTI block is implemented in a single USF mode, for example, the BTTI USF mode.

### Example 4: DA Uplink Scheduling of MTTI TBF in RTTI USF Mode

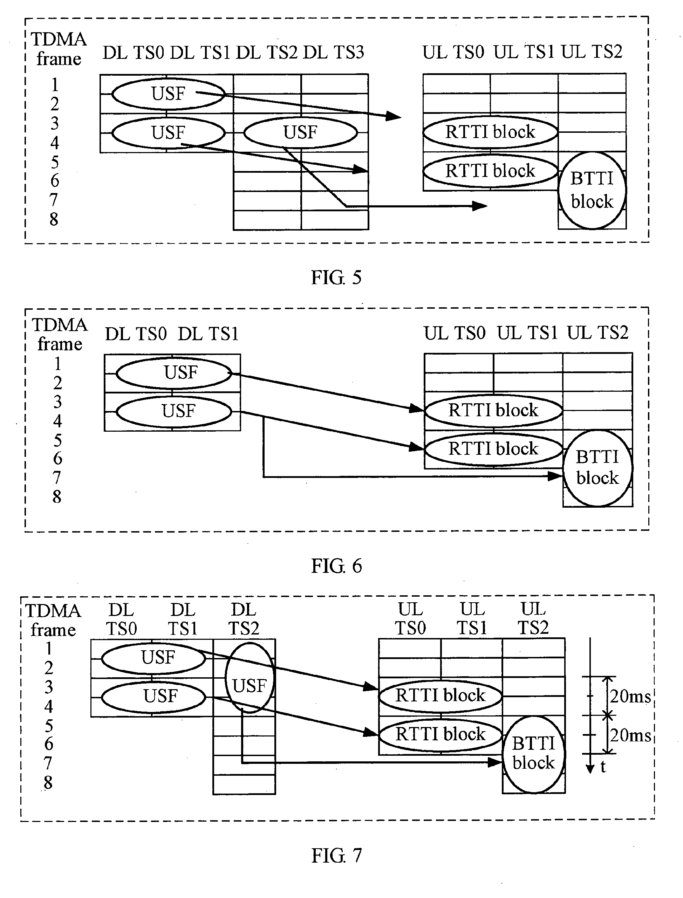

FIG 5 is a first schematic diagram of a radio block allocation operation of an MTTI TBF during DA uplink scheduling in an RTTI USF mode according to Example 4.

In this example, a downlink time slot corresponding to an uplink BTTI time slot may be an RTTI time slot pair.

If an MS detects a USF on a downlink RTTI time slot pair corresponding to an uplink RTTI time slot pair, the MS sends an RTTI radio block on a corresponding uplink RTTI time slot pair in next 10 ms.

If the MS detects a USF on a downlink RTTI time slot pair corresponding to an uplink BTTI time slot, the MS sends a BTTI radio block on a corresponding uplink BTTI time slot in next 20 ms. As shown in FIG 5, if the MS detects a USF on a downlink RTTI time slot pair (DL TS2, DL TS3) corresponding to an uplink BTTI time slot, the MS sends a BTTI block in next 20 ms. As shown in FIG 5, when the uplink resource scheduling of the MTTI TBF is performed in the RTTI USF mode, in order to schedule an uplink BTTI time slot (UL TS2) of the MS, the MS is required to monitor a downlink RTTI time slot pair (DL TS2, DL TS3) to receive a corresponding USF. If the MS receives the USF on the downlink RTTI time slot pair (DL TS2, DL TS3), the MS may send a BTTI block on the uplink time slot UL TS2 in next 20 ms.

In this example, the scheduling of uplink single TBF resources required by the BTTI block and the RTTI block is implemented in the RTTI USF mode.

FIG 6 is a second schematic diagram of the radio block allocation operation of the MTTI TBF during DA uplink scheduling in an RTTI USF mode according to example 4. The difference between this example and the example corresponding to FIG 5 lies in that, in this embodiment, an uplink RTTI time slot pair and an adjacent BTTI time slot thereof share an RTTI USF which indicates scheduling of an uplink BTTI radio block. As shown in FIG 6, if an MS detects a USF on a downlink RTTI time slot pair (DL TS0, DL TS1) corresponding to an uplink RTTI time slot pair (UL TS0, UL TS1) in the last 10 ms of current 20 ms, and an adjacent time slot of the uplink RTTI time slot pair is a BTTI time slot (UL TS2), the MS may send an RTTI radio block on the corresponding uplink RTTI time slot pair (UL TS0, UL TS1) in next 10 ms, and send a BTTI radio block on the corresponding uplink BTTI time slot (UL TS2) in next 20 ms.

If multi-slot capability of the MS supports at most three time slots to be received in a downlink direction, since one RTTI USF is transmitted through a pair of downlink time slots in the RTTI USF mode corresponding to the embodiment shown in FIG 5, the sum of the number of downlink time slots for receiving data that the MS is allowed to use is always even, and a BTTI radio block on UL TS2 in fact cannot be scheduled when the method shown in FIG 5 is used. However, in the embodiment corresponding to FIG 6, the BTTI time slot uses the RTTI USF designated by the adjacent RTTI time slot pair, that is, the RTTI USF is shared, and no other RTTI USF is designated for the uplink BTTI time slot anymore. Therefore, based on the technical effect achieved by the example corresponding to FIG 5, the example corresponding to FIG 6 further facilitates reducing requirements for the multi-slot capability of the MS in the communication process.

### Example 5: DA Uplink Scheduling of MTTI TBF in Dual USF Mode

FIG 7 is a schematic diagram of a radio block allocation operation of an MTTI TBF during DA uplink scheduling in a dual USF mode according to Example 5 of the present invention.

One MTTI TBF may send an RTTI radio block on one or more RTTI time slot pairs, and may also send a BTTI radio block on one or more BTTI time slots. In this embodiment, DA scheduling may be performed on an MTTI TBF in a dual USF mode.

An RTTI radio block is sent on an uplink time slot pair of a next RTTI radio block period (10 ms) in an RTTI USF mode. If an MS detects a USF corresponding to the MS on a downlink RTTI time slot pair corresponding to an uplink RTTI time slot pair, the MS may send an RTTI radio block in a next RTTI block period (10 ms) of a corresponding uplink RTTI time slot pair. For example, if the MS detects a USF corresponding to the MS on a downlink RTTI time slot pair (DL TS0, DL TS1), the MS may send an RTTI radio block in next 10 ms of an uplink RTTI time slot pair (UL TS0, UL TS1).

A BTTI radio block is sent in a next BTTI radio block period (20 ms) in a BTTI USF mode. If the MS detects a USF corresponding to the MS on a downlink BTTI time slot corresponding to an uplink BTTI time slot, the MS may send a BTTI radio block in a next BTTI radio block period (20 ms) corresponding to the uplink BTTI time slot. For example, if the MS detects a USF corresponding to the MS on a downlink BTTI time slot (DL TS3) with a sequence number of 3, the MS may send a BTTI radio block in next 20 ms of an uplink BTTI time slot with a sequence number of 3.

In this example, for the MTTI TBF, the BTTI radio block may be scheduled in the BTTI USF mode, and the RTTI radio block may be scheduled in the RTTI USF mode, thereby effectively maintaining bandwidth gain. Upon comparison between this embodiment and the MTTI TBF scheduling solution of scheduling the RTTI radio block in the BTTI USF mode in Embodiment 3 of the present invention, although in Embodiment 3, the uplink RTTI radio block and BTTI radio block may be scheduled, a scheduling delay of the RTTI radio block is increased. For example, the RTTI radio block period of scheduling in the RTTI USF mode is 10 ms in this embodiment, while the RTTI radio block period of scheduling in the BTTI USF mode is 20 ms in Embodiment 3. Therefore, in Embodiment 3, when the RTTI radio block is scheduled in the single USF mode, the scheduling delay is increased by 10 to 20 ms. That is, in this embodiment, the DA uplink scheduling in the dual USF mode is performed, thereby decreasing the scheduling delay.

In the following Embodiments or examples 6, 7, and 8, uplink scheduling of an MTTI TBF is performed by EDA. Embodiment 6 is an embodiment in which EDA scheduling is performed on an MTTI TBF in a single BTTI USF mode; Example 7 is an example in which EDA scheduling is performed on an MTTI TBF in a single RTTI USF mode; and Example 8 is an example in which EDA scheduling is performed on an MTTI TBF in a dual USF mode.

### Embodiment 6: EDA Uplink Scheduling of MTTI TBF in BTTI USF Mode

In the process of performing uplink scheduling on an MTTI TBF by EDA in a BTTI USF mode, an MS monitors downlink channels allocated by a network side to the MS from a downlink channel with the smallest sequence number, then monitors corresponding downlink channels with corresponding sequence numbers from a small sequence number to a large sequence number, and stops monitoring subsequent downlink channels. Then, the MS sends an RTTI radio block and a BTTI radio block on the same uplink channel corresponding to the downlink channel on which the USF is detected and on all subsequent uplink channels allocated by the network side to the MS in a next scheduling period (20 ms). Uplink data to be sent by the MS is encapsulated in the RTTI radio block and the BTTI radio block.

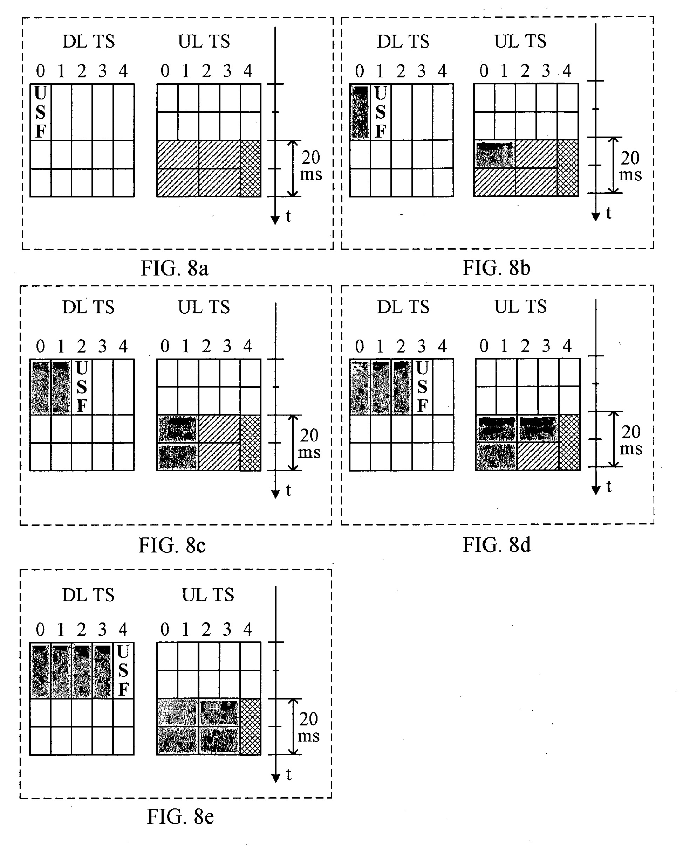

A radio block allocation method in uplink scheduling of an MTTI TBF by EDA in the BTTI USF mode is described in detail in the following with reference to FIGs. 8a to 11e.

In an application scenario corresponding to FIGs. 8a to 11e, it is assumed that uplink single TBF resource assignment information delivered by a network side includes: relevant information of uplink RTTI time slot pairs ((UL TS0, UL TS1) and (UL TS2, UL TS3)) allocated to an MS, relevant information of an uplink BTTI time slot (UL TS4), and a USF designated by each uplink time slot.

FIGs. 8a to 8e are first schematic diagrams of a radio block allocation operation of an MTTI TBF during EDA uplink scheduling in a BTTI USF mode according to Embodiment 6 of the present invention. In this embodiment, both the USF corresponding to the time slot with the lower sequence number and the USF corresponding to the time slot with the higher sequence number in the uplink RTTI time slot pair may indicate scheduling of a BTTI radio block of next 20 ms.

If an uplink time slot corresponding to a downlink time slot on which an MS detects a USF is a time slot with a lower sequence number (hereinafter referred to as a lower time slot) in an RTTI time slot pair, the MS may send an RTTI radio block on an RTTI time slot pair and all subsequent RTTI time slot pairs in a next scheduling period (20 ms), and may send a BTTI radio block on a BTTI time slot allocated after the lower time slot in the RTTI time slot pair corresponding to the USF. As shown in FIG 8a, assuming that an MS detects a USF allocated by a network side to the MS on a downlink time slot (DL TS0) with a sequence number of 0, the MS does not need to continue to monitor downlink time slots DL TS1, DL TS2, DL TS3, and DL TS4 with sequence numbers of 1, 2, 3, and 4. Since DL TS0 corresponds to an uplink time slot UL TS0 with a lower sequence number in an uplink RTTI time slot pair (UL TS0, UL TS1), the MS may send an RTTI radio block on uplink RTTI time slot pairs (UL TS0, UL TS1) and (UL TS2, UL TS3) in a next scheduling period (20 ms), and send a BTTI block on an uplink BTTI time slot UL TS4. As shown in FIG 8c, assuming that the MS does not detect a USF assigned by the network side to the MS on a downlink time slot UL TS0 with a sequence number of 0 or a downlink time slot UL TS1 with a sequence number of 1, the MS continues to monitor a downlink time slot DL TS2 with a sequence number of 2. Since an uplink time slot UL TS2 corresponding to DL TS2 on which the MS receives the USF is an uplink time slot with a lower sequence number in an uplink time slot pair (UL TS2, UL TS3), the MS may send an RTTI radio block on an uplink RTTI time slot pair (UL TS2, UL TS3) in a next scheduling period (20 ms), and may send a BTTI block on an uplink BTTI time slot UL TS4.

If an uplink time slot corresponding to a downlink time slot on which the MS detects a USF is a time slot with a higher sequence number (hereinafter referred to as a higher time slot) in an RTTI time slot pair, the MS may send an RTTI radio block on a corresponding RTTI time slot in the last 10 ms of a next scheduling period (20 ms), send the RTTI radio block on all RTTI time slot pairs after the corresponding RTTI time slot in the next 20 ms, and send a BTTI radio block on a BTTI time slot allocated after the higher time slot in the RTTI time slot pair corresponding to the USF. As shown in FIG 8b, assuming that an MS detects a USF allocated by a network side to the MS on a downlink time slot (DL TS1) with a sequence number of 1, since DL TS1 corresponds to an uplink time slot UL TS1 with a higher sequence number in an uplink RTTI time slot pair (UL TS0, UL TS1), the MS may send an RTTI radio block in the last 10 ms in an uplink RTTI time slot pair (UL TS0, UL TS1) in a next scheduling period (20 ms) and on an uplink RTTI time slot pair (UL TS2, UL TS3) in the next scheduling period (20 ms), and send a BTTI block on an uplink BTTI time slot UL TS4. As shown in FIG 8d, assuming that a downlink time slot on which an MS receives a USF is DL TS3, since an uplink time slot UL TS3 corresponding to DL TS3 is an uplink time slot with a higher sequence number in an uplink time slot pair (UL TS2, UL TS3), the MS may send an RTTI radio block in the last 10 ms of an uplink RTTI time slot pair (UL TS2, UL TS3) in a next scheduling period (20 ms), and send a BTTI block on an uplink BTTI time slot UL TS4.

If an uplink time slot corresponding to a downlink time slot on which an MS detects a USF is a BTTI time slot, the MS may send a BTTI radio block on a BTTI time slot and all BTTI time slots allocated after the BTTI time slot in a next scheduling period (20 ms), and send an RTTI radio block on all RTTI time slot pairs after the corresponding BTTI time slot in the next 20 ms. As shown in FIG 8e, assuming that a downlink time slot on which an MS receives a USF is DL TS4, since an uplink time slot UL TS4 corresponding to DL TS4 is an uplink BTTI time slot UL TS4, the MS may send a BTTI block on an uplink BTTI time slot UL TS4 in a next scheduling period (20 ms). If uplink time slots after UL TS4 in the next scheduling period (20 ms) further include RTTI time slot pairs, the MS may further send an RTTI radio block on the RTTI time slot pairs (not shown in the drawing).

When a network side allocates uplink resources by EDA, an MS monitors multiple different downlink time slots corresponding to multiple uplink time slots pre-allocated by the network side from the downlink time slot with the lowest sequence number, then monitors corresponding downlink time slots in sequence from a low sequence number to a high sequence number, and stops monitoring subsequent downlink time slots upon receiving a corresponding USF value on a downlink time slot. Then, the MS sends uplink data on a corresponding uplink time slot and all allocated subsequent uplink time slots in a next radio block period.

According to the technical solution shown in FIGs. 8a to 8e, in the BTTI USF mode, both the USF corresponding to the time slot with a lower sequence number and the USF corresponding to the time slot with a higher sequence number in the RTTI time slot pair may indicate scheduling of a BTTI radio block of next 20 ms, so that the EDA scheduling on a BTTI radio block and an RTTI radio block of an MTTI TBF is implemented, thereby improving the flexibility of uplink resource scheduling.

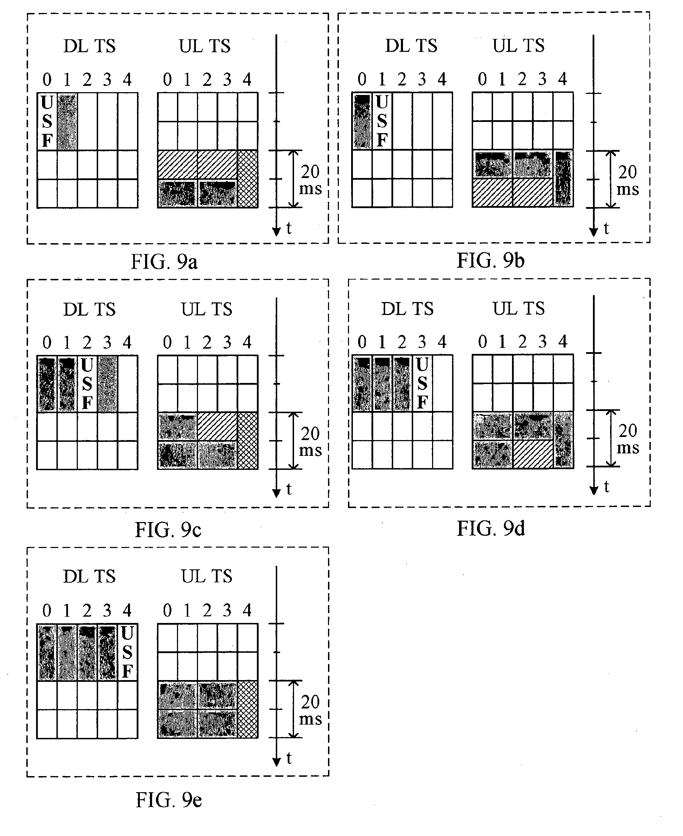

FIGs. 9a to 9e are second schematic diagrams of the radio block allocation operation of the MTTI TBF during EDA uplink scheduling in a BTTI USF mode according to Embodiment 6 of the present invention. The difference between this embodiment and the embodiment corresponding to FIGs. 8a to 8e lies in the manner in which an RTTI radio block is scheduled. In this embodiment, only a USF corresponding to a time slot with a lower sequence number in an RTTI time slot pair is used to indicate scheduling of a BTTI radio block of next 20 ms.

Specifically, the details are as follows.

If an uplink time slot corresponding to a downlink time slot on which an MS detects a USF is the lower time slot in an RTTI time slot pair, the MS may send an RTTI radio block on a corresponding RTTI time slot pair and a subsequent RTTI time slot pair in the first 10 ms of a next scheduling period (20 ms), and may send a BTTI radio block on a BTTI time slot allocated after the lower time slot in the RTTI time slot pair corresponding to the USF. As shown in FIG 9a, assuming that an MS detects a USF allocated by a network side to the MS on a downlink time slot (DL TS0) with a sequence number of 0, the MS may send an RTTI radio block on uplink RTTI time slot pairs (UL TS0, UL TS1) and (UL TS2, UL TS3) in the first 10 ms of a next scheduling period (20 ms), and may send a BTTI radio block on a BTTI time slot UL TS4 allocated after the lower time slot UL TS0 in the uplink RTTI time slot pair (UL TS0, UL TS1). As shown in FIG 9c, assuming that an MS detects a USF allocated by a network side to the MS on a downlink time slot (DL TS2) with a sequence number of 2, the MS may send an RTTI radio block on an uplink RTTI time slot pair (UL TS2, UL TS3) in the first 10 ms of a next scheduling period (20 ms), and may send a BTTI radio block on a BTTI time slot UL TS4 allocated after the lower time slot UL TS2 in the uplink RTTI time slot pair (UL TS2, UL TS3) corresponding to the USF.

If an uplink time slot corresponding to a downlink time slot on which an MS detects a USF is the higher time slot in an RTTI time slot pair, the MS may send an RTTI radio block on a corresponding RTTI time slot pair and a subsequent RTTI time slot pair in the last 10 ms of a next scheduling period (20 ms). As shown in FIG 9b, assuming that an MS detects a USF allocated by a network side to the MS on a downlink time slot (DL TS1) with a sequence number of 1, the MS may send an RTTI radio block on a time slot UL TS1 with a higher sequence number in an uplink RTTI time slot pair (UL TS0, UL TS1) in the last 10 ms of a next scheduling period (20 ms), and may send the RTTI radio block on an uplink RTTI time slot pair (UL TS2, UL TS3) after UL TS1. As shown in FIG 9d, assuming that an MS detects a USF allocated by a network side to the MS on a downlink time slot (DL TS3) with a sequence number of 3, the MS may send an RTTI radio block on a time slot UL TS1 with a higher sequence number in an uplink RTTI time slot pair (UL TS0, UL TS1) in the last 10 ms of a next scheduling period (20 ms).

If an uplink time slot corresponding to a downlink time slot on which the MS detects a USF is a time slot with a lower sequence number in an RTTI time slot pair, it indicates that the MS does not need to monitor a time slot with a lower sequence number in a subsequent RTTI time slot pair anymore, but still needs to continue to monitor a time slot with a higher sequence number in the subsequent RTTI time slot pair. If an uplink time slot corresponding to a downlink time slot on which the MS detects a USF is a time slot with a higher sequence number in an RTTI time slot pair, the MS does not need to monitor a time slot with a higher sequence number in a subsequent RTTI time slot pair anymore, but still needs to monitor a time slot with a lower sequence number in the subsequent RTTI time slot pair. When the MS detects a USF on both time slots with a lower sequence number and a higher sequence number in an RTTI time slot pair, the MS does not need to monitor time slots with a lower sequence number and a higher sequence number in subsequent RTTI time slot pairs anymore.

If an uplink time slot corresponding to a downlink time slot on which the MS detects a USF is a BTTI time slot, the MS may send a BTTI radio block on a corresponding BTTI time slot and subsequent BTTI time slots in next 20 ms, and may send an RTTI radio block on all RTTI time slot pairs after the corresponding BTTI time slot in the next 20 ms. As shown in FIG 9e, assuming that an MS detects a USF allocated by a network side to the MS on a downlink time slot (DL TS4) with a sequence number of 4, the MS may send a BTTI radio block on a corresponding BTTI time slot (UL TS4) in a next scheduling period (20 ms). If a BTTI time slot and/or an RTTI time slot pair are further allocated after UL TS4, the MS may send the BTTI radio block on the BTTI time slot allocated after UL TS4, and send an RTTI radio block on the RTTI time slot pair allocated after UL TS4.

According to the technical solution shown in FIGs. 9a to 9e, in the BTTI USF mode, only the USF corresponding to the time slot with a lower sequence number in the RTTI time slot pair is used to indicate scheduling of a BTTI radio block of next 20 ms, so that the EDA scheduling on a BTTI radio block and an RTTI radio block of an MTTI TBF is implemented, thereby improving the flexibility of uplink resource scheduling.

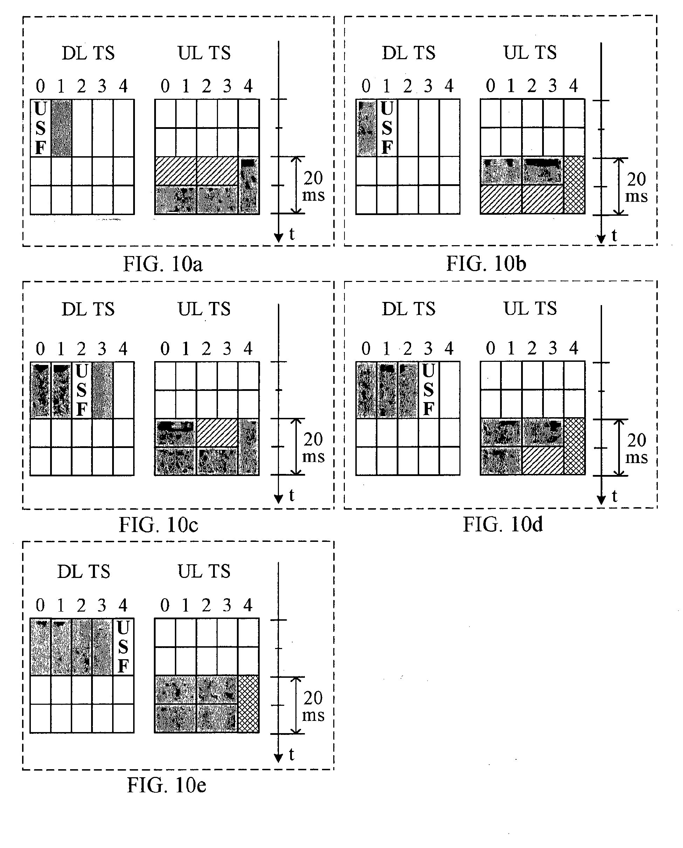

FIGs. 10a to 10e are third schematic diagrams of the radio block allocation operation of the MTTI TBF during EDA uplink scheduling in a BTTI USF mode according to Embodiment 6 of the present invention. Different from the embodiment corresponding to FIGs. 9a to 9e, in this embodiment, only a USF corresponding to a time slot with a higher sequence number in an RTTI time slot pair is used to indicate scheduling of a BTTI radio block of next 20 ms.

If an uplink time slot corresponding to a downlink time slot on which an MS detects a USF is the lower time slot in an RTTI time slot pair, the MS may send an RTTI radio block on a corresponding RTTI time slot and subsequent RTTI time slot pairs in the first 10 ms of next 20 ms, but do not send a BTTI radio block on a BTTI time slot allocated after the lower time slot in the RTTI time slot pair corresponding to the USF. As shown in FIG 10a, assuming that an MS detects a USF allocated by a network side to the MS on a downlink time slot (DL TS0) with a sequence number of 0, the MS may send an RTTI radio block on an uplink RTTI time slot pair (UL TS0, UL TS1) and a subsequent uplink RTTI time slot pair (UL TS2, UL TS3) in the first 10 ms of a next scheduling period (20 ms). As shown in FIG 10d, assuming that an MS detects a USF allocated by a network side to the MS on a downlink time slot (DL TS3) with a sequence number of 3, the MS may send an RTTI radio block on a time slot UL TS1 with a higher sequence number in an uplink RTTI time slot pair (UL TS0, UL TS1) in the last 10 ms of a next scheduling period (20 ms).

If an uplink time slot corresponding to a downlink time slot on which an MS detects a USF is the higher time slot in an RTTI time slot pair, the MS may send an RTTI radio block on a corresponding RTTI time slot pair and a subsequent RTTI time slot pair in the last 10 ms of a next scheduling period (20 ms), and may send a BTTI radio block on a BTTI time slot allocated after the higher time slot in the RTTI time slot pair corresponding to the USF. As shown in FIG 10b, assuming that an MS detects a USF allocated by a network side to the MS on a downlink time slot (DL TS1) with a sequence number of 1, the MS may send an RTTI radio block on a time slot (UL TS1) with a higher sequence number in an uplink RTTI time slot pair (UL TS0, UL TS1), and send the RTTI radio block on an RTTI time slot pair allocated after UL TS1 in the last 10 ms of a next scheduling period (20 ms).

According to the technical solution shown in FIGs. 10a to 10e, in the BTTI USF mode, the USF corresponding to the time slot with a higher sequence number in the RTTI time slot pair is used to indicate scheduling of a BTTI radio block of next 20 ms, so that the EDA scheduling on a BTTI radio block and an RTTI radio block of an MTTI TBF is implemented, thereby improving the flexibility of uplink resource scheduling.

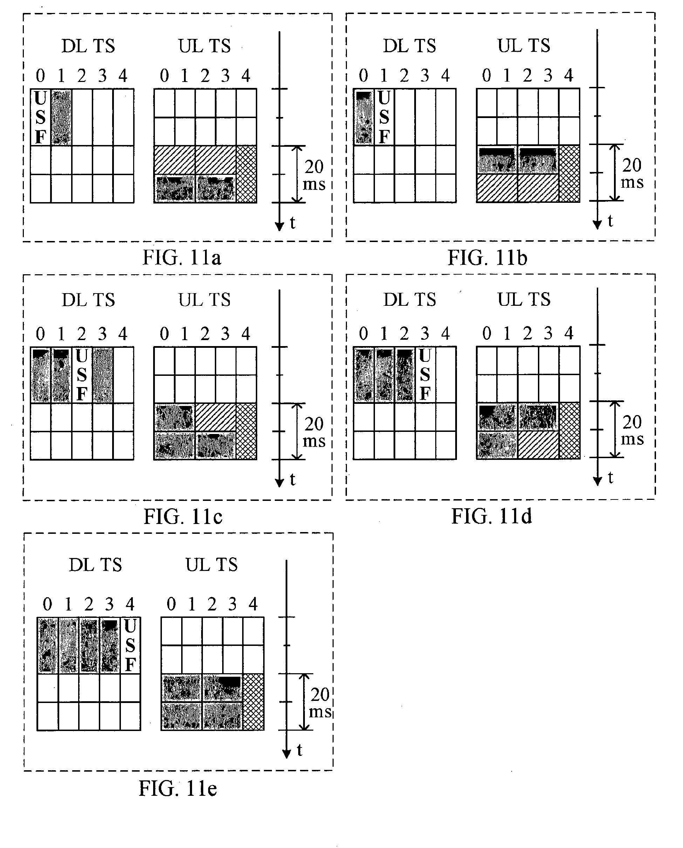

FIGs. 11a to 11e are fourth schematic diagrams of the radio block allocation operation of the MTTI TBF during EDA uplink scheduling in a BTTI USF mode according to Embodiment 6 of the present invention. The difference between the embodiment shown in FIGs. 11a to 11e and the embodiments shown in FIGs. 9a to 9e and FIGs. 10a to 10e lies in that: if a designated USF is detected on any time slot in an RTTI time slot pair, an uplink BTTI block may be sent on subsequent BTTI time slots, that is, subsequent BTTI time slots may be scheduled for both the lower time slot and the higher time slot.

If an MS detects a USF on a time slot with a lower sequence number in a downlink RTTI time slot pair corresponding to an uplink RTTI time slot pair in current 20 ms, the MS may send an RTTI radio block on a corresponding uplink RTTI time slot pair and a subsequent RTTI time slot pair in the first 10 ms of next 20 ms, and send a BTTI radio block on an uplink BTTI time slot allocated after a time slot with a lower sequence number in the corresponding uplink RTTI time slot pair in the next 20 ms.

If the MS detects a USF on a time slot with a higher sequence number in a downlink RTTI time slot pair corresponding to an uplink RTTI time slot pair in current 20 ms, the MS may send an RTTI radio block on a corresponding uplink RTTI time slot pair and a subsequent RTTI time slot pair in the last 10 ms of next 20 ms, and send a BTTI radio block on an uplink BTTI time slot allocated after a time slot with a lower sequence number in the corresponding uplink RTTI time slot pair in the next 20 ms. Details are as shown in FIGs. 11a to 11e, and details are not repeated again.

According to the technical solution shown in FIGs. 11a to 11e, in the BTTI USF mode, the BTTI USF corresponding to either time slot in the RTTI time slot pair is used to indicate scheduling of a BTTI radio block of next 20 ms, so that the EDA scheduling on a BTTI radio block and an RTTI radio block of an MTTI TBF is implemented, thereby improving the flexibility of uplink resource scheduling.

In the case that uplink BTTI time slots are allocated, FIGs 8a to 11e may further have other implementations. An example is as follows.

If an MS detects a USF allocated by a network side to the MS on a downlink BTTI time slot corresponding to an uplink BTTI time slot before an uplink RTTI time slot pair, the MS may send a BTTI block on the uplink BTTI time slot corresponding to the detected USF and subsequent uplink BTTI time slots in next 20ms, but cannot send an RTTI radio block on an RTTI time slot pair after the uplink BTTI time slot corresponding to the detected USF. That is, the MS needs to continue to monitor downlink RTTI time slot pairs corresponding to subsequent uplink RTTI time slot pairs, and decides whether to perform corresponding sending on an uplink RTTI time slot according to whether the MS detects a BTTI USF allocated by the network side to the MS on the downlink RTTI time slot pairs corresponding to the subsequent uplink RTTI time slot pairs. If the MS detects a BTTI USF allocated by the network side to the MS on the downlink RTTI time slot pairs corresponding to the subsequent uplink RTTI time slot pairs, the corresponding uplink resource scheduling manner is the same as that described in FIGs. 8a to 11e.

### Example 7: EDA Uplink Scheduling of MTTI TBF in RTTI USF Mode

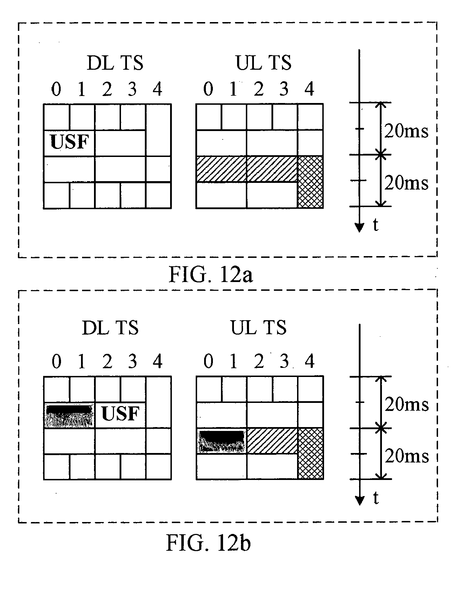

FIGs. 12a to 12b are schematic diagrams of a radio block allocation operation of an MTTI TBF during EDA uplink scheduling in an RTTI USF mode according to Example 7.

If an MS detects a USF on a downlink RTTI time slot pair corresponding to an uplink RTTI time slot pair in the last 10 ms of current 20 ms, and an uplink BTTI time slot is allocated after the uplink RTTI time slot pair, the MS may send an RTTI radio block on a corresponding uplink RTTI time slot pair and other subsequent uplink RTTI time slot pairs in next 10 ms, and send a BTTI radio block on the uplink BTTI time slot in next 20 ms, and details are as shown in FIGs. 12a to 12b.

According to the technical solution shown in FIGs. 12a to 12b, in the BTTI USF mode, an RTTI time slot pair and a subsequent BTTI time slot share a USF, and the USF corresponding to the RTTI time slot pair may be used to indicate scheduling of a BTTI radio block of next 20 ms, so that the EDA scheduling on a BTTI radio block and an RTTI radio block of an MTTI TBF is implemented, thereby improving the flexibility of uplink resource scheduling.

### Example 8: EDA Uplink Scheduling of MTTI TBF in Dual USF Mode

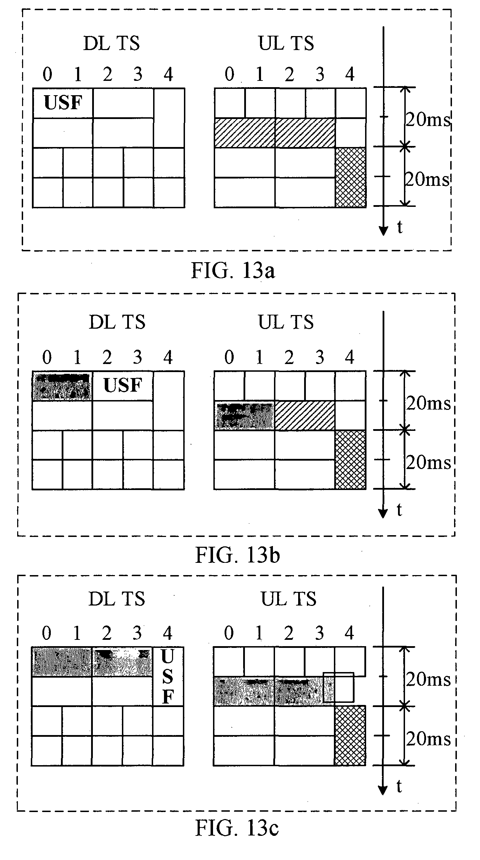

FIGs. 13a to 13c are first schematic diagrams of a radio block allocation operation of an MTTI TBF during EDA uplink scheduling in a dual USF mode according to Example 8. In this example scheduling of a BTTI radio block may be indicated through a USF corresponding to a downlink RTTI time slot pair in the first 10 ms of a BTTI period.

An RTTI radio block is scheduled according to a period of 10 ms, and a BTTI radio block is scheduled according to a period of 20 ms.

If an MS detects an RTTI USF on a downlink RTTI time slot pair corresponding to an uplink RTTI time slot pair in the first 10 ms of current 20 ms, the MS sends an RTTI radio block on a corresponding uplink RTTI time slot pair and a subsequent uplink RTTI time slot pair in the last 10 ms of the current 20 ms. If a BTTI time slot is allocated after the corresponding uplink time slot pair, the MS may send a BTTI radio block on an uplink BTTI time slot in next 20 ms. As shown in FIG 13a, if the MS detects a USF of a downlink RTTI time slot pair (DL TS0, DL TS1) corresponding to an uplink RTTI time slot pair (UL TS0, UL TS1) in the first 10 ms of current 20 ms, the MS may send an RTTI radio block on an uplink RTTI time slot pair (UL TS0, UL TS1) which is same as an uplink RTTI time slot pair corresponding to the downlink RTTI time slot pair of the detected the USF and an uplink RTTI time slot pair (UL TS2, UL TS3) allocated after (UL TS0, UL TS1) in the last 10 ms of the current 20 ms, and send a BTTI radio block on an uplink BTTI time slot (UL TS4) in next 20 ms. As shown in FIG 13b, if the MS detects a USF of a downlink RTTI time slot pair (DL TS2, DL TS3) corresponding to an uplink RTTI time slot pair (UL TS2, UL TS3) in the first 10 ms of current 20 ms, the MS may send an RTTI radio block on an uplink RTTI time slot pair (UL TS2, UL TS3) which is same as an uplink RTTI time slot pair corresponding to the downlink RTTI time slot pair of the detected the USF in the last 10 ms of the current 20 ms, and may send a BTTI radio block on an uplink BTTI time slot (UL TS4) in next 20 ms.

If the MS detects a BTTI USF on a downlink BTTI time slot corresponding to an uplink BTTI time slot in 20 ms, the MS sends a BTTI radio block on an uplink BTTI time slot in next 20 ms, as shown in FIG 13c.

According to the technical solution shown in FIGs. 13a to 13c, in the dual USF mode, scheduling of a BTTI radio block may be indicated through a USF corresponding to the downlink RTTI time slot pair in the first 10 ms of a BTTI period, so that the EDA scheduling on a BTTI radio block and an RTTI radio block of an MTTI TBF is implemented, thereby improving the flexibility of uplink resource scheduling.

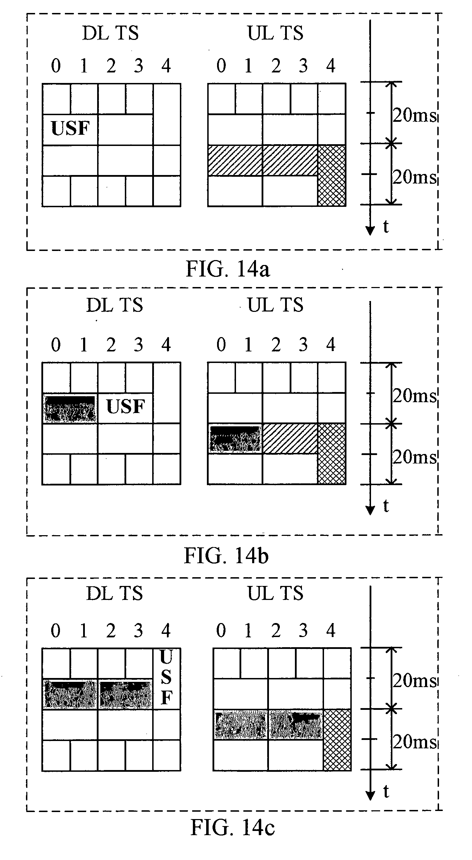

FIGs. 14a to 14c are second schematic diagrams of the radio block allocation operation of the MTTI TBF during EDA uplink scheduling in a dual USF mode according to Example 8. Different from the example corresponding to FIGs. 13a to 13c, in this example, scheduling of a BTTI radio block may be indicated through a USF corresponding to a downlink RTTI time slot pair in the last 10 ms of a BTTI period.

If an MS detects an RTTI USF on a downlink RTTI time slot pair corresponding to an uplink RTTI time slot pair in the last 10 ms of current 20 ms, the MS sends an RTTI radio block on the same uplink RTTI time slot pair and a subsequent uplink RTTI time slot pair in the first 10 ms of next 20 ms. If a BTTI time slot is further allocated after the same uplink time slot pair, the MS may send a BTTI radio block on an uplink BTTI time slot in next 20 ms. As shown in FIG 14a, if the MS detects a USF of a downlink RTTI time slot pair (DL TS0, DL TS1) corresponding to an uplink RTTI time slot pair (UL TS0, UL TS1) in the last 10 ms of current 20 ms, the MS may send an RTTI radio block on an uplink RTTI time slot pair (UL TS0, UL TS1) which is same as an uplink RTTI time slot pair corresponding to the downlink RTTI time slot pair of the detected the USF and an uplink RTTI time slot pair (UL TS2, UL TS3) allocated after (UL TS0, UL TS1) in the first 10 ms of next 20 ms, and send a BTTI radio block on an uplink BTTI time slot (UL TS4) in next 20 ms. As shown in FIG 14b, if the MS detects a USF of a downlink RTTI time slot pair (DL TS2, DL TS3) corresponding to an uplink RTTI time slot pair (UL TS2, UL TS3) in the last 10 ms of current 20 ms, the MS may send an RTTI radio block on an uplink RTTI time slot pair (UL TS2, UL TS3) which is same as an uplink RTTI time slot pair corresponding to the downlink RTTI time slot pair of the detected the USF in the first 10 ms of next 20 ms, and may send a BTTI radio block on an uplink BTTI time slot (UL TS4) in next 20 ms.

If the MS detects a BTTI USF on a downlink BTTI time slot corresponding to an uplink BTTI time slot in 20 ms, the MS sends a BTTI radio block on an uplink BTTI time slot in next 20 ms, as shown in FIG 14c.

According to the technical solution shown in FIGs. 14a to 14c, in the dual USF mode, scheduling of a BTTI radio block may be indicated through a USF corresponding to the downlink RTTI time slot pair in the last 10 ms of a BTTI period, so that the EDA scheduling on a BTTI radio block and an RTTI radio block of an MTTI TBF is implemented, thereby improving the flexibility of uplink resource scheduling.

### Example 9: Mobile Station

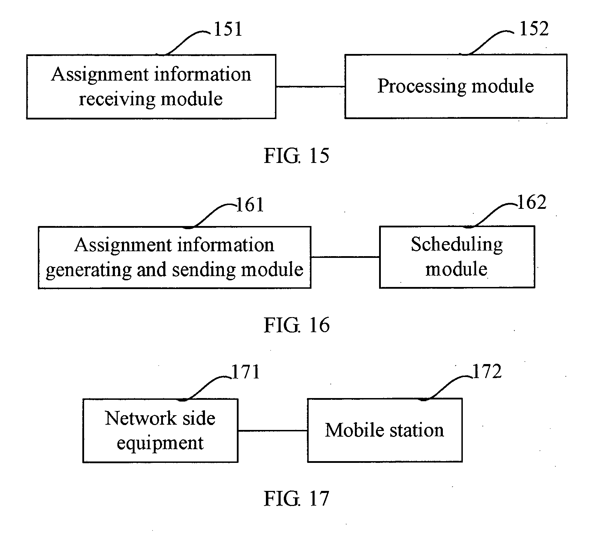

FIG 15 is a schematic structure diagram of a mobile station according to Example 9. As shown in FIG 15, in this example, the mobile station includes an assignment information receiving module 151 and a processing module 152.

The assignment information receiving module 151 is configured to receive uplink single TBF resource assignment information sent by a network side, where the uplink single TBF resource assignment information includes information of an uplink time slot allocated by the network side to the mobile station, and a USF corresponding to the uplink time slot. The information of the uplink time slot includes information of at least one uplink RTTI time slot pair and information of at least one uplink BTTI time slot.

The processing module 152 is configured to send an uplink BTTI radio block and/or an uplink RTTI radio block on an uplink time slot corresponding to the detected USF, or on a part or all of uplink time slots with sequence numbers equal to or greater than that of the corresponding uplink time slot, when the USF is detected on a downlink time slot corresponding to the uplink time slot.

In the above technical solution, optionally, the downlink time slot may be a time slot with a lower sequence number, a time slot with a higher sequence number, or all time slots in a downlink RTTI time slot pair corresponding to the uplink RTTI time slot pair, or a downlink BTTI time slot corresponding to the uplink BTTI time slot; the types of the USF include a BTTI USF and an RTTI USF; one BTTI USF corresponds to one uplink RTTI time slot pair or one uplink BTTI time slot; and one RTTI USF corresponds to one uplink RTTI time slot pair or one uplink BTTI time slot. In this case, the processing module 152 may further be configured to monitor the BTTI USF on a time slot in a downlink RTTI time slot pair corresponding to the uplink RTTI time slot pair, and/or monitor the BTTI USF on a downlink BTTI time slot corresponding to the uplink BTTI time slot, and/or monitor the RTTI USF on a downlink RTTI time slot pair corresponding to the uplink RTTI time slot pair or the uplink BTTI time slot.

In this example, according to mixed scheduling of the uplink BTTI time slot and the uplink RTTI time slot pair of the MTTI TBF by the network side equipment, the mobile station may send not only a BTTI block but also an RTTI block in one TBF, thereby improving the flexibility of uplink resource scheduling. For a mechanism of implementing mixed scheduling of uplink resources for a single MTTI TBF by the network side equipment, reference may be made to the description of the embodiments corresponding to FIGs. 1 and 4 to 14c, and details are not repeated again.

### Example 10: Network Side Equipment

FIG 16 is a schematic structure diagram of a network side equipment according to Example 10. As shown in FIG 16, in this example, the network side equipment includes: an assignment information generating and sending module 161 and a scheduling module 162.

The assignment information generating and sending module 161 is configured to generate uplink single TBF resource assignment information and send the uplink single TBF resource assignment information to a mobile station, where the uplink single TBF resource assignment information includes information of an uplink time slot allocated by a network side to the mobile station, and a USF corresponding to the uplink time slot. The information of the uplink time slot includes information of at least one uplink RTTI time slot pair and information of at least one uplink BTTI time slot.

The scheduling module 162 is configured to send the USF on a downlink time slot corresponding to the uplink time slot, so as to notify the mobile station of sending an uplink BTTI radio block and/or an uplink RTTI radio block on the uplink time slot corresponding to the detected USF, or on a part or all of uplink time slots with sequence numbers equal to or greater than that of the corresponding uplink time slot, when the USF is detected on the downlink time slot corresponding to the uplink time slot.

In the above technical solution, optionally, the downlink time slot may be a time slot with a lower sequence number, a time slot with a higher sequence number, or all time slots in a downlink RTTI time slot pair corresponding to the uplink RTTI time slot pair, or a downlink BTTI time slot corresponding to the uplink BTTI time slot; the types of the USF include a BTTI USF and an RTTI USF; one BTTI USF corresponds to one uplink RTTI time slot pair or one uplink BTTI time slot; and one RTTI USF corresponds to one uplink RTTI time slot pair or one uplink BTTI time slot. In this case, the scheduling module 162 may further be configured to send the BTTI USF on a time slot in a downlink RTTI time slot pair corresponding to the uplink RTTI time slot pair, and/or send the BTTI USF on a downlink BTTI time slot corresponding to the uplink BTTI time slot, and/or send the RTTI USF on a downlink RTTI time slot pair corresponding to the uplink RTTI time slot pair or the uplink BTTI time slot.

In this example, mixed scheduling of the uplink BTTI time slot and the uplink RTTI time slot pair of the MTTI TBF by the network side equipment makes it possible for the mobile station to send not only a BTTI block but also an RTTI block in one TBF, thereby improving the flexibility of uplink resource scheduling. For a mechanism of implementing mixed scheduling of uplink resources for a single MTTI TBF by the network side equipment, reference may be made to the description of the embodiments corresponding to FIGs. 3 to 14c, and details are not repeated again.

### Example 11: Communication System

FIG 17 is a schematic structure diagram of a communication system according to Example 11. As shown in FIG 17, in this example, the communication system includes: a network side equipment 171 and a mobile station 172.

The network side equipment 171 is configured to generate uplink single TBF resource assignment information, send the uplink single TBF resource assignment information to the mobile station 172, and send a USF on a downlink time slot corresponding to an uplink time slot. The uplink single TBF resource assignment information includes information of an uplink time slot allocated by a network side to the mobile station 172, and a USF corresponding to the uplink time slot. The information of the uplink time slot includes information of at least one uplink RTTI time slot pair and information of at least one uplink BTTI time slot.

The MS 172 is configured to receive the uplink single TBF resource assignment information, and send an uplink BTTI radio block and/or an uplink RTTI radio block on an uplink time slot corresponding to the detected USF, or on a part or all of uplink time slots with sequence numbers equal to or greater than that of the corresponding uplink time slot, when the USF is detected on a downlink time slot corresponding to the uplink time slot.

In the above technical solution, optionally, the downlink time slot may be a time slot with a lower sequence number, a time slot with a higher sequence number, or all time slots in a downlink RTTI time slot pair corresponding to the uplink RTTI time slot pair, or a downlink BTTI time slot corresponding to the uplink BTTI time slot; the types of the USF include a BTTI USF and an RTTI USF; one BTTI USF corresponds to one uplink RTTI time slot pair or one uplink BTTI time slot; and one RTTI USF corresponds to one uplink RTTI time slot pair or one uplink BTTI time slot. In this case, the network side equipment 171 may further be configured to send the BTTI USF on a time slot in a downlink RTTI time slot pair corresponding to the uplink RTTI time slot pair, and/or send the BTTI USF on a downlink BTTI time slot corresponding to the uplink BTTI time slot, and/or send the RTTI USF on a downlink RTTI time slot pair corresponding to the uplink RTTI time slot pair or the uplink BTTI time slot; and the mobile station 172 may further be configured to monitor the BTTI USF on a time slot in a downlink RTTI time slot pair corresponding to the uplink RTTI time slot pair, and/or monitor the BTTI USF on a downlink BTTI time slot corresponding to the uplink BTTI time slot, and/or monitor the RTTI USF on a downlink RTTI time slot pair corresponding to the uplink RTTI time slot pair or the uplink BTTI time slot.

In this example, the network side equipment performs mixed scheduling on the uplink BTTI time slot and the uplink RTTI time slot pair of the MTTI TBF, so that the MS may send not only a BTTI block but also an RTTI block in one TBF, thereby improving the flexibility of uplink resource scheduling. For a mechanism of implementing mixed scheduling of uplink resources for a single MTTI TBF by the network side equipment and the mobile station in cooperation, reference may be made to the description of the embodiments corresponding to FIGs. 3 to 14c, and will not be repeated again.

It should be understood by persons of ordinary skill in the art that, the accompanying drawings are merely schematic diagrams of a preferred embodiment, and modules or processes in the accompanying drawings are not necessarily required in implementing the present invention.

It should be understood by persons of ordinary skill in the art that, modules in a device according to an embodiment may be distributed in the device of the embodiment according to the description of the embodiment, or be correspondingly changed to be disposed in one or more devices different from this embodiment. The modules of the above embodiment may be combined into one module, or further divided into a plurality of sub-modules.

The sequence numbers of the above embodiments of the present invention are merely for the convenience of description, and do not imply the preference among the embodiments.

It may be understood by persons of ordinary skill in the art that, all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, or an optical disk.

Finally, it should be noted that, the above embodiments are merely provided for describing the technical solutions of the present invention, but not intended to limit the present invention. It should be understood by persons of ordinary skill in the art that, although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of the corresponding technical solutions to depart from the scope of the present invention, which is defined in the claims.

## Claims

1. An uplink resource scheduling method, comprising:
receiving (11) uplink single temporary block flow, TBF, resource assignment information sent by a network side, wherein the uplink single TBF resource assignment information comprises information of an uplink time slot allocated by the network side to a mobile station, and an uplink state flag, USF, corresponding to the uplink time slot, and the information of the uplink time slot comprises information of at least one uplink reduced transmission timing interval, RTTI, time slot pair and information of at least one uplink basic transmission timing interval, BTTI, time slot; and
sending (12) at least one of an uplink BTTI radio block and an uplink RTTI radio block on the uplink time slot corresponding to the detected USF, or on a part or all of uplink time slots with sequence numbers equal to or greater than that of the corresponding uplink time slot, when the USF is detected on a downlink time slot corresponding to the uplink time slot;
wherein the downlink time slot is a downlink BTTI time slot corresponding to the uplink BTTI time slot; type of the USF comprises a BTTI USF; one BTTI USF corresponds to one uplink RTTI time slot pair or one uplink BTTI time slot;
wherein the monitoring the USF on the downlink time slot corresponding to the uplink time slot comprises: monitoring the BTTI USF on a downlink BTTI time slot corresponding to the uplink BTTI time slot; and
**characterized in that** the sending the at least one of the uplink BTTI radio block and the uplink RTTI radio block on the part or all of the uplink time slots with sequence numbers equal to or greater than that of the corresponding uplink time slot when the USF is detected on the downlink time slot corresponding to the uplink time slot comprises:
if the BTTI USF is detected on the downlink BTTI time slot corresponding to the uplink BTTI time slot, sending the BTTI radio block on the uplink BTTI time slot corresponding to the detected BTTI USF and subsequent uplink BTTI time slots and sending the RTTI radio block on an uplink RTTI time slot pair with a sequence number greater than that of the corresponding uplink BTTI time slot, wherein the BTTI radio block and the RTTI radio block are sent in the next 20 ms of a current period when the BTTI USF is received
wherein the sending the at least one of the uplink BTTI radio block and the uplink RTTI radio block on the part or all of the uplink time slots with sequence numbers equal to or greater than that of the corresponding uplink time slot when the USF is detected on the downlink time slot corresponding to the uplink time slot comprises at least one of the following:
if the BTTI USF is detected on the time slot with the lower sequence number in the downlink RTTI time slot pair corresponding to the uplink RTTI time slot pair, sending the RTTI radio block on the uplink RTTI time slot pair corresponding to the detected BTTI USF and subsequent uplink RTTI time slot pairs, and sending the BTTI radio block on subsequent uplink BTTI time slots with sequence numbers greater than that of the time slot with the lower sequence number in the corresponding uplink RTTI time slot pair, wherein the RTTI radio block is sent in the first 10 ms of the next 20 ms of a current period when the BTTI USF is received, and the BTTI radio block is sent in the next 20 ms of the current period; and
if the BTTI USF is detected on the time slot with the higher sequence number in the downlink RTTI time slot pair corresponding to the uplink RTTI time slot pair, sending the RTTI radio block on the uplink RTTI time slot pair corresponding to the detected BTTI USF and subsequent uplink RTTI time slot pairs, and sending the BTTI radio block on subsequent uplink BTTI time slots with sequence numbers greater than that of the time slot with the lower sequence number in the corresponding uplink RTTI time slot pair, wherein the RTTI radio block is sent in the last 10 ms of the next 20 ms of a current period when the BTTI USF is received, and the BTTI radio block is sent in the next 20 ms of the current period.

2. An uplink resource scheduling method, comprising:
generating (31) uplink single temporary block flow, TBF, resource assignment information and sending the uplink single TBF resource assignment information to a mobile station, wherein the uplink single TBF resource assignment information comprises information of an uplink time slot allocated by a network side to the mobile station, and an uplink state flag, USF, corresponding to the uplink time slot, and the information of the uplink time slot comprises information of at least one uplink reduced transmission timing interval, RTTI, time slot pair and information of at least one uplink basic transmission timing interval, BTTI, time slot; and
sending (32) the USF on a downlink time slot corresponding to the uplink time slot, so as to notify the mobile station of sending at least one of an uplink BTTI radio block and an uplink RTTI radio block on the uplink time slot corresponding to the detected USF, or on a part or all of uplink time slots with sequence numbers equal to or greater than that of the corresponding uplink time slot, when the USF is detected on the downlink time slot corresponding to the uplink time slot;
wherein the downlink time slot is a downlink BTTI time slot corresponding to the uplink BTTI time slot; type of the USF comprises a BTTI USF; one BTTI USF corresponds to one uplink RTTI time slot pair or one uplink BTTI time slot;
wherein the sending the USF on the downlink time slot corresponding to the uplink time slot comprises: sending the BTTI USF on a downlink BTTI time slot corresponding to the uplink BTTI time slot; and
**characterized in that** the method further comprises:
if the BTTI USF is detected on the downlink BTTI time slot corresponding to the uplink BTTI time slot, receiving the BTTI radio block on the uplink BTTI time slot corresponding to the detected BTTI USF and subsequent uplink BTTI time slots and receiving the RTTI radio block on an uplink RTTI time slot pair with a sequence number greater than that of the corresponding uplink BTTI time slot, wherein the BTTI radio block and the RTTI radio block are sent in the next 20 ms of a current period when the BTTI USF is received by the mobile station
wherein, the method further comprises at least one of the following:
if the BTTI USF is detected on the time slot with the lower sequence number in the downlink RTTI time slot pair corresponding to the uplink RTTI time slot pair, receving the RTTI radio block on the uplink RTTI time slot pair corresponding to the detected BTTI USF and subsequent uplink RTTI time slot pairs, and receving the BTTI radio block on subsequent uplink BTTI time slots with sequence numbers greater than that of the time slot with the lower sequence number in the corresponding uplink RTTI time slot pair, wherein the RTTI radio block is sent in the first 10 ms of the next 20 ms of a current period when the BTTI USF is received, and the BTTI radio block is sent in the next 20 ms of the current period; and
if the BTTI USF is detected on the time slot with the higher sequence number in the downlink RTTI time slot pair corresponding to the uplink RTTI time slot pair, receving the RTTI radio block on the uplink RTTI time slot pair corresponding to the detected BTTI USF and subsequent uplink RTTI time slot pairs, and receving the BTTI radio block on subsequent uplink BTTI time slots with sequence numbers greater than that of the time slot with the lower sequence number in the corresponding uplink RTTI time slot pair, wherein the RTTI radio block is sent in the last 10 ms of the next 20 ms of a current period when the BTTI USF is received, and the BTTI radio block is sent in the next 20 ms of the current period.

3. A mobile station, comprising:
an assignment information receiving module (151), configured to receive uplink single temporary block flow, TBF, resource assignment information sent by a network side, wherein the uplink single TBF resource assignment information comprises information of an uplink time slot allocated by the network side to the mobile station, and an uplink state flag, USF, corresponding to the uplink time slot, and the information of the uplink time slot comprises information of at least one uplink reduced transmission timing interval, RTTI, time slot pair and information of at least one uplink basic transmission timing interval, BTTI, time slot; and
a processing module (152), configured to send at least one of an uplink BTTI radio block and an uplink RTTI radio block on the uplink time slot corresponding to the detected USF, or on a part or all of uplink time slots with sequence numbers equal to or greater than that of the corresponding uplink time slot, when the USF is detected on a downlink time slot corresponding to the uplink time slot;
wherein the downlink time slot is a downlink BTTI time slot corresponding to the uplink BTTI time slot; type of the USF comprises a BTTI USF; one BTTI USF corresponds to one uplink RTTI time slot pair or one uplink BTTI time slot;
wherein the processing module (152) is further configured to monitor the BTTI USF on a downlink BTTI time slot corresponding to the uplink BTTI time slot; and
**characterized in that** the processing module (152) is further configured to, if the BTTI USF is detected on the downlink BTTI time slot corresponding to the uplink BTTI time slot, send the BTTI radio block on the uplink BTTI time slot corresponding to the detected BTTI USF and subsequent uplink BTTI time slots and send the RTTI radio block on an uplink RTTI time slot pair with a sequence number greater than that of the corresponding uplink BTTI time slot, wherein the BTTI radio block and the RTTI radio block are sent in the next 20 ms of a current period when the BTTI USF is received
wherein the processing module (152) is further configured to perform at least one of the following:
if the BTTI USF is detected on the time slot with the lower sequence number in the downlink RTTI time slot pair corresponding to the uplink RTTI time slot pair, sending the RTTI radio block on the uplink RTTI time slot pair corresponding to the detected BTTI USF and subsequent uplink RTTI time slot pairs, and sending the BTTI radio block on subsequent uplink BTTI time slots with sequence numbers greater than that of the time slot with the lower sequence number in the corresponding uplink RTTI time slot pair, wherein the RTTI radio block is sent in the first 10 ms of the next 20 ms of a current period when the BTTI USF is received, and the BTTI radio block is sent in the next 20 ms of the current period; and
if the BTTI USF is detected on the time slot with the higher sequence number in the downlink RTTI time slot pair corresponding to the uplink RTTI time slot pair, sending the RTTI radio block on the uplink RTTI time slot pair corresponding to the detected BTTI USF and subsequent uplink RTTI time slot pairs, and sending the BTTI radio block on subsequent uplink BTTI time slots with sequence numbers greater than that of the time slot with the lower sequence number in the corresponding uplink RTTI time slot pair, wherein the RTTI radio block is sent in the last 10 ms of the next 20 ms of a current period when the BTTI USF is received, and the BTTI radio block is sent in the next 20 ms of the current period.

4. A network side equipment, comprising:
an assignment information generating and sending module (161), configured to generate uplink single temporary block flow, TBF, resource assignment information and send the uplink single TBF resource assignment information to a mobile station, wherein the uplink single TBF resource assignment information comprises information of an uplink time slot allocated by a network side to the mobile station, and an uplink state flag, USF, corresponding to the uplink time slot, and the information of the uplink time slot comprises information of at least one uplink Reduced transmission timing interval, RTTI, time slot pair and information of at least one uplink basic transmission timing interval, BTTI, time slot; and
a scheduling module (162), configured to send the USF on a downlink time slot corresponding to the uplink time slot, so as to notify the mobile station of sending at least one of an uplink BTTI radio block and an uplink RTTI radio block on the uplink time slot corresponding to the detected USF, or on a part or all of uplink time slots with sequence numbers equal to or greater than that of the corresponding uplink time slot, when the USF is detected on the downlink time slot corresponding to the uplink time slot;
wherein the downlink time slot is a downlink BTTI time slot corresponding to the uplink BTTI time slot; type of the USF comprises a BTTI USF; one BTTI USF corresponds to one uplink RTTI time slot pair or one uplink BTTI time slot;
wherein the scheduling module (162) is further configured to send the BTTI USF on a downlink BTTI time slot corresponding to the uplink BTTI time slot;
**characterized in that** the scheduling module (162) is further configured to, if the BTTI USF is detected on the downlink BTTI time slot corresponding to the uplink BTTI time slot, receive the BTTI radio block on the uplink BTTI time slot corresponding to the detected BTTI USF and subsequent uplink BTTI time slots and receive the RTTI radio block on an uplink RTTI time slot pair with a sequence number greater than that of the corresponding uplink BTTI time slot, wherein the BTTI radio block and the RTTI radio block are sent in the next 20 ms of a current period when the BTTI USF is received by the mobile station
wherein the scheduling module (162) is further configured to perform at least one of the following:
if the BTTI USF is detected on the time slot with the lower sequence number in the downlink RTTI time slot pair corresponding to the uplink RTTI time slot pair, receving the RTTI radio block on the uplink RTTI time slot pair corresponding to the detected BTTI USF and subsequent uplink RTTI time slot pairs, and receving the BTTI radio block on subsequent uplink BTTI time slots with sequence numbers greater than that of the time slot with the lower sequence number in the corresponding uplink RTTI time slot pair, wherein the RTTI radio block is sent in the first 10 ms of the next 20 ms of a current period when the BTTI USF is received, and the BTTI radio block is sent in the next 20 ms of the current period; and
if the BTTI USF is detected on the time slot with the higher sequence number in the downlink RTTI time slot pair corresponding to the uplink RTTI time slot pair, receving the RTTI radio block on the uplink RTTI time slot pair corresponding to the detected BTTI USF and subsequent uplink RTTI time slot pairs, and receving the BTTI radio block on subsequent uplink BTTI time slots with sequence numbers greater than that of the time slot with the lower sequence number in the corresponding uplink RTTI time slot pair, wherein the RTTI radio block is sent in the last 10 ms of the next 20 ms of a current period when the BTTI USF is received, and the BTTI radio block is sent in the next 20 ms of the current period.

## Patentansprüche

1. Verfahren zur Planung von Aufwärtsverbindung-Betriebsmitteln, umfassend:
Empfangen (11) von einzelnen Aufwärtsverbindung-Temporärblockfluss-Betriebsmittelzuweisungsinformationen, TBF-Betriebsmittelzuweisungsinformationen, gesandt von einer Netzwerkseite, wobei die einzelnen Aufwärtsverbindung-TBF-Betriebsmittelzuweisungsinformationen Informationen über einen Aufwärtsverbindung-Zeitschlitz, der von der Netzwerkseite einer Mobilstation zugeteilt wurde, und eine mit dem Aufwärtsverbindung-Zeitschlitz korrespondierende Aufwärtsverbindung-Statusmarkierung, USF, umfassen und die Informationen über den Aufwärtsverbindung-Zeitschlitz Informationen über mindestens ein reduziertes Übertragungstaktungsintervall-Aufwärtsverbindung-Zeitschlitzpaar, RTTI-Aufwärtsverbindung-Zeitschlitzpaar, und Informationen über mindestens einen grundlegenden Übertragungstaktungsintervall-Aufwärtsverbindung-Zeitschlitz, BTTI-Aufwärtsverbindung-Zeitschlitz, umfassen; und
Senden (12) mindestens eines eines Aufwärtsverbindung-BTTI-Funkblocks und eines Aufwärtsverbindung-RTTI-Funkblocks in dem mit der detektierten USF korrespondierenden Aufwärtsverbindung-Zeitschlitz oder in einem Teil oder sämtlichen der Aufwärtsverbindung-Zeitschlitze mit Sequenznummern gleich der oder größer als die des korrespondierenden Aufwärtsverbindung-Zeitschlitzes, wenn die USF in einem mit dem Aufwärtsverbindung-Zeitschlitz korrespondierenden Abwärtsverbindung-Zeitschlitz detektiert wird;
wobei der Abwärtsverbindung-Zeitschlitz ein mit dem Aufwärtsverbindung-BTTI-Zeitschlitz korrespondierender Abwärtsverbindung-BTTI-Zeitschlitz ist; der Typ der USF eine BTTI-USF umfasst; eine BTTI-USF mit einem Aufwärtsverbindung-RTTI-Zeitschlitzpaar oder einem Aufwärtsverbindung-BTTI-Zeitschlitz korrespondiert;
wobei die Überwachung der USF in dem mit dem Aufwärtsverbindung-Zeitschlitz korrespondierenden Abwärtsverbindung-Zeitschlitz umfasst: Überwachen der BTTI-USF in einem mit dem Aufwärtsverbindung-BTTI-Zeitschlitz korrespondierenden Abwärtsverbindung-BTTI-Zeitschlitz; und
**dadurch gekennzeichnet, dass** das Senden des mindestens einen Aufwärtsverbindung-BTTI-Funkblocks und des Aufwärtsverbindung-RTTI-Funkblocks in einem Teil oder sämtlichen der Aufwärtsverbindung-Zeitschlitze mit Sequenznummern gleich der oder größer als die des korrespondierenden Aufwärtsverbindung-Zeitschlitzes, wenn die USF in dem mit dem Aufwärtsverbindung-Zeitschlitz korrespondierenden Abwärtsverbindung-Zeitschlitz detektiert wird, umfasst:
wenn die BTTI-USF in dem mit dem Aufwärtsverbindung-BTTI-Zeitschlitz korrespondierenden Abwärtsverbindung-BTTI-Zeitschlitz detektiert wird, Senden des BTTI-Funkblocks in dem mit der detektierten BTTI-USF korrespondierenden Aufwärtsverbindung-BTTI-Zeitschlitz und nachfolgenden Aufwärtsverbindung-BTTI-Zeitschlitzen und Senden des RTTI-Funkblocks in einem Aufwärtsverbindung-RTTI-Zeitschlitzpaar mit einer Sequenznummer größer als die des korrespondierenden Aufwärtsverbindung-BTTI-Zeitschlitzes, wobei der BTTI-Funkblock und der RTTI-Funkblock in den nächsten 20 ms einer gegenwärtigen Periode gesandt werden, wenn die BTTI-USF empfangen wird
wobei das Senden des mindestens einen des Aufwärtsverbindung-BTTI-Funkblocks und des Aufwärtsverbindung-RTTI-Funkblocks in dem Teil oder sämtlichen der Aufwärtsverbindung-Zeitschlitze mit Sequenznummern gleich der oder größer als die des korrespondierenden Aufwärtsverbindung-Zeitschlitzes, wenn die USF in dem mit dem Aufwärtsverbindung-Zeitschlitz korrespondierenden Abwärtsverbindung-Zeitschlitz detektiert wird, mindestens eines des Folgenden umfasst:
wenn die BTTI-USF in dem Zeitschlitz mit der niedrigeren Sequenznummer in dem mit dem Aufwärtsverbindung-RTTI-Zeitschlitzpaar korrespondierenden Abwärtsverbindung-RTTI-Zeitschlitzpaar detektiert wird, Senden des RTTI-Funkblocks in dem mit der detektierten BTTI-USF korrespondierenden Aufwärtsverbindung-RTTI-Zeitschlitzpaar und nachfolgenden Aufwärtsverbindung-RTTI-Zeitschlitzpaaren und Senden des BTTI-Funkblocks in nachfolgenden Aufwärtsverbindung-BTTI-Zeitschlitzen mit Sequenznummern größer als die des Zeitschlitzes mit der niedrigeren Sequenznummer in dem korrespondierenden Aufwärtsverbindung-RTTI-Zeitschlitzpaar, wobei der RTTI-Funkblock in den ersten 10 ms der nächsten 20 ms einer gegenwärtigen Periode gesandt wird, wenn die BTTI-USF empfangen wird, und der BTTI-Funkblock in den nächsten 20 ms der gegenwärtigen Periode gesandt wird; und
wenn die BTTI-USF in dem Zeitschlitz mit der höheren Sequenznummer in dem mit dem Aufwärtsverbindung-RTTI-Zeitschlitzpaar korrespondierenden Abwärtsverbindung-RTTI-Zeitschlitzpaar detektiert wird, Senden des RTTI-Funkblocks in dem mit der detektierten BTTI-USF korrespondierenden Aufwärtsverbindung-RTTI-Zeitschlitzpaar und nachfolgenden Aufwärtsverbindung-RTTI-Zeitschlitzpaaren und Senden des BTTI-Funkblocks in nachfolgenden Aufwärtsverbindung-BTTI-Zeitschlitzen mit Sequenznummern größer als die des Zeitschlitzes mit der niedrigeren Sequenznummer in dem korrespondierenden Aufwärtsverbindung-RTTI-Zeitschlitzpaar, wobei der RTTI-Funkblock in den letzten 10 ms der nächsten 20 ms einer gegenwärtigen Periode gesandt wird, wenn die BTTI-USF empfangen wird, und der BTTI-Funkblock in den nächsten 20 ms der gegenwärtigen Periode gesandt wird.

2. Verfahren zur Planung von Aufwärtsverbindung-Betriebsmitteln, umfassend:
Erzeugen (31) von einzelnen Aufwärtsverbindung-Temporärblockfluss-Betriebsmittelzuweisungsinformationen, TBF-Betriebsmittelzuweisungsinformationen, und Senden der einzelnen Aufwärtsverbindung-TBF-Betriebsmittelzuweisungsinformationen zu einer Mobilstation, wobei die einzelnen Aufwärtsverbindung-TBF-Betriebsmittelzuweisungsinformationen Informationen über einen Aufwärtsverbindung-Zeitschlitz, der von einer Netzwerkseite der Mobilstation zugeteilt wurde, und eine mit dem Aufwärtsverbindung-Zeitschlitz korrespondierende Aufwärtsverbindung-Statusmarkierung, USF, umfassen und die Informationen über den Aufwärtsverbindung-Zeitschlitz Informationen über mindestens ein reduziertes Übertragungstaktungsintervall-Aufwärtsverbindung-Zeitschlitzpaar, RTTI-Aufwärtsverbindung-Zeitschlitzpaar, und Informationen über mindestens einen grundlegenden Übertragungstaktungsintervall-Aufwärtsverbindung-Zeitschlitz, BTTI-Aufwärtsverbindung-Zeitschlitz, umfassen; und
Senden (32) der USF in einem mit dem Aufwärtsverbindung-Zeitschlitz korrespondierenden Abwärtsverbindung-Zeitschlitz, um die Mobilstation über das Senden mindestens eines eines Aufwärtsverbindung-BTTI-Funkblocks und eines Aufwärtsverbindung-RTTI-Funkblocks in dem mit der detektierten USF korrespondierenden Aufwärtsverbindung-Zeitschlitz oder in einem Teil oder sämtlichen der Aufwärtsverbindung-Zeitschlitze mit Sequenznummern gleich der oder größer als die des korrespondierenden Aufwärtsverbindung-Zeitschlitzes zu benachrichtigen, wenn die USF in dem mit dem Aufwärtsverbindung-Zeitschlitz korrespondierenden Abwärtsverbindung-Zeitschlitz detektiert wird;
wobei der Abwärtsverbindung-Zeitschlitz ein mit dem Aufwärtsverbindung-BTTI-Zeitschlitz korrespondierender Abwärtsverbindung-BTTI-Zeitschlitz ist; der Typ der USF eine BTTI-USF umfasst; eine BTTI-USF mit einem Aufwärtsverbindung-RTTI-Zeitschlitzpaar oder einem Aufwärtsverbindung-BTTI-Zeitschlitz korrespondiert;
wobei das Senden der USF in dem mit dem Aufwärtsverbindung-Zeitschlitz korrespondierenden Abwärtsverbindung-Zeitschlitz umfasst: Senden der BTTI-USF in einem mit dem Aufwärtsverbindung-BTTI-Zeitschlitz korrespondierenden Abwärtsverbindung-BTTI-Zeitschlitz; und
**dadurch gekennzeichnet, dass** das Verfahren ferner umfasst:
wenn die BTTI-USF in dem mit dem Aufwärtsverbindung-BTTI-Zeitschlitz korrespondierenden Abwärtsverbindung-BTTI-Zeitschlitz detektiert wird, Empfangen des BTTI-Funkblocks in dem mit der detektierten BTTI-USF korrespondierenden Aufwärtsverbindung-BTTI-Zeitschlitz und nachfolgenden Aufwärtsverbindung-BTTI-Zeitschlitzen und Empfangen des RTTI-Funkblocks in einem Aufwärtsverbindung-RTTI-Zeitschlitzpaar mit einer Sequenznummer größer als die des korrespondierenden Aufwärtsverbindung-BTTI-Zeitschlitzes, wobei der BTTI-Funkblock und der RTTI-Funkblock in den nächsten 20 ms einer gegenwärtigen Periode gesandt werden, wenn die BTTI-USF von der Mobilstation empfangen wird,
wobei das Verfahren ferner mindestens eines des Folgenden umfasst:
wenn die BTTI-USF in dem Zeitschlitz mit der niedrigeren Sequenznummer in dem mit dem Aufwärtsverbindung-RTTI-Zeitschlitzpaar korrespondierenden Abwärtsverbindung-RTTI-Zeitschlitzpaar detektiert wird, Empfangen des RTTI-Funkblocks in dem mit der detektierten BTTI-USF korrespondierenden Aufwärtsverbindung-RTTI-Zeitschlitzpaar und nachfolgenden Aufwärtsverbindung-RTTI-Zeitschlitzpaaren und Empfangen des BTTI-Funkblocks in nachfolgenden Aufwärtsverbindung-BTTI-Zeitschlitzen mit Sequenznummern größer als die des Zeitschlitzes mit der niedrigeren Sequenznummer in dem korrespondierenden Aufwärtsverbindung-RTTI-Zeitschlitzpaar, wobei der RTTI-Funkblock in den ersten 10 ms der nächsten 20 ms einer gegenwärtigen Periode gesandt wird, wenn die BTTI-USF empfangen wird, und der BTTI-Funkblock in den nächsten 20 ms der gegenwärtigen Periode gesandt wird; und
wenn die BTTI-USF in dem Zeitschlitz mit der höheren Sequenznummer in dem mit dem Aufwärtsverbindung-RTTI-Zeitschlitzpaar korrespondierenden Abwärtsverbindung-RTTI-Zeitschlitzpaar detektiert wird, Empfangen des RTTI-Funkblocks in dem mit der detektierten BTTI-USF korrespondierenden Aufwärtsverbindung-RTTI-Zeitschlitzpaar und nachfolgenden Aufwärtsverbindung-RTTI-Zeitschlitzpaaren und Empfangen des BTTI-Funkblocks in nachfolgenden Aufwärtsverbindung-BTTI-Zeitschlitzen mit Sequenznummern größer als die des Zeitschlitzes mit der niedrigeren Sequenznummer in dem korrespondierenden Aufwärtsverbindung-RTTI-Zeitschlitzpaar, wobei der RTTI-Funkblock in den letzten 10 ms der nächsten 20 ms einer gegenwärtigen Periode gesandt wird, wenn die BTTI-USF empfangen wird, und der BTTI-Funkblock in den nächsten 20 ms der gegenwärtigen Periode gesandt wird.

3. Mobilstation, umfassend:
ein Zuweisungsinformationen-Empfangsmodul (151), konfiguriert zum Empfangen von einzelnen Aufwärtsverbindung-Temporärblockfluss-Betriebsmittelzuweisungsinformationen, TBF-Betriebsmittelzuweisungsinformationen, gesandt von einer Netzwerkseite, wobei die einzelnen Aufwärtsverbindung-TBF-Betriebsmittelzuweisungsinformationen Informationen über einen Aufwärtsverbindung-Zeitschlitz, der von der Netzwerkseite der Mobilstation zugeteilt wurde, und eine mit dem Aufwärtsverbindung-Zeitschlitz korrespondierende Aufwärtsverbindung-Statusmarkierung, USF, umfassen und die Informationen über den Aufwärtsverbindung-Zeitschlitz Informationen über mindestens ein reduziertes Übertragungstaktungsintervall-Aufwärtsverbindung-Zeitschlitzpaar, RTTI-Aufwärtsverbindung-Zeitschlitzpaar, und Informationen über mindestens einen grundlegenden Übertragungstaktungsintervall-Aufwärtsverbindung-Zeitschlitz, BTTI-Aufwärtsverbindung-Zeitschlitz, umfassen; und
ein Verarbeitungsmodul (152), konfiguriert zum Senden mindestens eines eines Aufwärtsverbindung-BTTI-Funkblocks und eines Aufwärtsverbindung-RTTI-Funkblocks in dem mit der detektierten USF korrespondierenden Aufwärtsverbindung-Zeitschlitz oder in einem Teil oder sämtlichen der Aufwärtsverbindung-Zeitschlitze mit Sequenznummern gleich der oder größer als die des korrespondierenden Aufwärtsverbindung-Zeitschlitzes, wenn die USF in einem mit dem Aufwärtsverbindung-Zeitschlitz korrespondierenden Abwärtsverbindung-Zeitschlitz detektiert wird;
wobei der Abwärtsverbindung-Zeitschlitz ein mit dem Aufwärtsverbindung-BTTI-Zeitschlitz korrespondierender Abwärtsverbindung-BTTI-Zeitschlitz ist; der Typ der USF eine BTTI-USF umfasst; eine BTTI-USF mit einem Aufwärtsverbindung-RTTI-Zeitschlitzpaar oder einem Aufwärtsverbindung-BTTI-Zeitschlitz korrespondiert;
wobei das Verarbeitungsmodul (152) ferner konfiguriert ist zum Überwachen der BTTI-USF in einem mit dem Aufwärtsverbindung-BTTI-Zeitschlitz korrespondierenden Abwärtsverbindung-BTTI-Zeitschlitz; und
**dadurch gekennzeichnet, dass** das Verarbeitungsmodul (152) ferner konfiguriert ist zum Senden, wenn die BTTI-USF in dem mit dem Aufwärtsverbindung-BTTI-Zeitschlitz korrespondierenden Abwärtsverbindung-BTTI-Zeitschlitz detektiert wird, des BTTI-Funkblocks in dem mit der detektierten BTTI-USF korrespondierenden Aufwärtsverbindung-BTTI-Zeitschlitz und nachfolgenden Aufwärtsverbindung-BTTI-Zeitschlitzen und Senden des RTTI-Funkblocks in einem Aufwärtsverbindung-RTTI-Zeitschlitzpaar mit einer Sequenznummer größer als die des korrespondierenden Aufwärtsverbindung-BTTI-Zeitschlitzes, wobei der BTTI-Funkblock und der RTTI-Funkblock in den nächsten 20 ms einer gegenwärtigen Periode gesandt werden, wenn die BTTI-USF empfangen wird,
wobei das Verarbeitungsmodul (152) ferner konfiguriert ist zum Durchführen mindestens eines des Folgenden:
wenn die BTTI-USF in dem Zeitschlitz mit der niedrigeren Sequenznummer in dem mit dem Aufwärtsverbindung-RTTI-Zeitschlitzpaar korrespondierenden Abwärtsverbindung-RTTI-Zeitschlitzpaar detektiert wird, Senden des RTTI-Funkblocks in dem mit der detektierten BTTI-USF korrespondierenden Aufwärtsverbindung-RTTI-Zeitschlitzpaar und nachfolgenden Aufwärtsverbindung-RTTI-Zeitschlitzpaaren und Senden des BTTI-Funkblocks in nachfolgenden Aufwärtsverbindung-BTTI-Zeitschlitzen mit Sequenznummern größer als die des Zeitschlitzes mit der niedrigeren Sequenznummer in dem korrespondierenden Aufwärtsverbindung-RTTI-Zeitschlitzpaar, wobei der RTTI-Funkblock in den ersten 10 ms der nächsten 20 ms einer gegenwärtigen Periode gesandt wird, wenn die BTTI-USF empfangen wird, und der BTTI-Funkblock in den nächsten 20 ms der gegenwärtigen Periode gesandt wird; und
wenn die BTTI-USF in dem Zeitschlitz mit der höheren Sequenznummer in dem mit dem Aufwärtsverbindung-RTTI-Zeitschlitzpaar korrespondierenden Abwärtsverbindung-RTTI-Zeitschlitzpaar detektiert wird, Senden des RTTI-Funkblocks in dem mit der detektierten BTTI-USF korrespondierenden Aufwärtsverbindung-RTTI-Zeitschlitzpaar und nachfolgenden Aufwärtsverbindung-RTTI-Zeitschlitzpaaren und Senden des BTTI-Funkblocks in nachfolgenden Aufwärtsverbindung-BTTI-Zeitschlitzen mit Sequenznummern größer als die des Zeitschlitzes mit der niedrigeren Sequenznummer in dem korrespondierenden Aufwärtsverbindung-RTTI-Zeitschlitzpaar, wobei der RTTI-Funkblock in den letzten 10 ms der nächsten 20 ms einer gegenwärtigen Periode gesandt wird, wenn die BTTI-USF empfangen wird, und der BTTI-Funkblock in den nächsten 20 ms der gegenwärtigen Periode gesandt wird.

4. Netzwerkseitige Vorrichtung, umfassend:
ein Zuweisungsinformationen-Erzeugungs- und -Sendemodul (161), konfiguriert zum Erzeugen von einzelnen Aufwärtsverbindung-Temporärblockfluss-Betriebsmittelzuweisungsinformationen, TBF-Betriebsmittelzuweisungsinformationen, und Senden der einzelnen Aufwärtsverbindung-TBF-Betriebsmittelzuweisungsinformationen zu einer Mobilstation, wobei die einzelnen Aufwärtsverbindung-TBF-Betriebsmittelzuweisungsinformationen Informationen über einen Aufwärtsverbindung-Zeitschlitz, der von einer Netzwerkseite der Mobilstation zugeteilt wurde, und eine mit dem Aufwärtsverbindung-Zeitschlitz korrespondierende Aufwärtsverbindung-Statusmarkierung, USF, umfassen und die Informationen über den Aufwärtsverbindung-Zeitschlitz Informationen über mindestens ein reduziertes Übertragungstaktungsintervall-Aufwärtsverbindung-Zeitschlitzpaar, RTTI-Aufwärtsverbindung-Zeitschlitzpaar, und Informationen über mindestens einen grundlegenden Übertragungstaktungsintervall-Aufwärtsverbindung-Zeitschlitz, BTTI-Aufwärtsverbindung-Zeitschlitz, umfassen; und
ein Planungsmodul (162), konfiguriert zum Senden der USF in einem mit dem Aufwärtsverbindung-Zeitschlitz korrespondierenden Abwärtsverbindung-Zeitschlitz, um die Mobilstation über das Senden mindestens eines eines Aufwärtsverbindung-BTTI-Funkblocks und eines Aufwärtsverbindung-RTTI-Funkblocks in dem mit der detektierten USF korrespondierenden Aufwärtsverbindung-Zeitschlitz oder in einem Teil oder sämtlichen der Aufwärtsverbindung-Zeitschlitze mit Sequenznummern gleich der oder größer als die des korrespondierenden Aufwärtsverbindung-Zeitschlitzes zu benachrichtigen, wenn die USF in dem mit dem Aufwärtsverbindung-Zeitschlitz korrespondierenden Abwärtsverbindung-Zeitschlitz detektiert wird;
wobei der Abwärtsverbindung-Zeitschlitz ein mit dem Aufwärtsverbindung-BTTI-Zeitschlitz korrespondierender Abwärtsverbindung-BTTI-Zeitschlitz ist; der Typ der USF eine BTTI-USF umfasst; eine BTTI-USF mit einem Aufwärtsverbindung-RTTI-Zeitschlitzpaar oder einem Aufwärtsverbindung-BTTI-Zeitschlitz korrespondiert;
wobei das Planungsmodul (162) ferner konfiguriert ist zum Senden der BTTI-USF in einem mit dem Aufwärtsverbindung-BTTI-Zeitschlitz korrespondierenden Abwärtsverbindung-BTTI-Zeitschlitz;
**dadurch gekennzeichnet, dass** das Planungsmodul (162) ferner konfiguriert ist zum Empfangen, wenn die BTTI-USF in dem mit dem Aufwärtsverbindung-BTTI-Zeitschlitz korrespondierenden Abwärtsverbindung-BTTI-Zeitschlitz detektiert wird, des BTTI-Funkblocks in dem mit der detektierten BTTI-USF korrespondierenden Aufwärtsverbindung-BTTI-Zeitschlitz und nachfolgenden Aufwärtsverbindung-BTTI-Zeitschlitzen und Empfangen des RTTI-Funkblocks in einem Aufwärtsverbindung-RTTI-Zeitschlitzpaar mit einer Sequenznummer größer als die des korrespondierenden Aufwärtsverbindung-BTTI-Zeitschlitzes, wobei der BTTI-Funkblock und der RTTI-Funkblock in den nächsten 20 ms einer gegenwärtigen Periode gesandt werden, wenn die BTTI-USF von der Mobilstation empfangen wird
wobei das Planungsmodul (162) ferner konfiguriert ist zum Durchführen mindestens eines des Folgenden:
wenn die BTTI-USF in dem Zeitschlitz mit der niedrigeren Sequenznummer in dem mit dem Aufwärtsverbindung-RTTI-Zeitschlitzpaar korrespondierenden Abwärtsverbindung-RTTI-Zeitschlitzpaar detektiert wird, Empfangen des RTTI-Funkblocks in dem mit der detektierten BTTI-USF korrespondierenden Aufwärtsverbindung-RTTI-Zeitschlitzpaar und nachfolgenden Aufwärtsverbindung-RTTI-Zeitschlitzpaaren und Empfangen des BTTI-Funkblocks in nachfolgenden Aufwärtsverbindung-BTTI-Zeitschlitzen mit Sequenznummern größer als die des Zeitschlitzes mit der niedrigeren Sequenznummer in dem korrespondierenden Aufwärtsverbindung-RTTI-Zeitschlitzpaar, wobei der RTTI-Funkblock in den ersten 10 ms der nächsten 20 ms einer gegenwärtigen Periode gesandt wird, wenn die BTTI-USF empfangen wird, und der BTTI-Funkblock in den nächsten 20 ms der gegenwärtigen Periode gesandt wird; und
wenn die BTTI-USF in dem Zeitschlitz mit der höheren Sequenznummer in dem mit dem Aufwärtsverbindung-RTTI-Zeitschlitzpaar korrespondierenden Abwärtsverbindung-RTTI-Zeitschlitzpaar detektiert wird, Empfangen des RTTI-Funkblocks in dem mit der detektierten BTTI-USF korrespondierenden Aufwärtsverbindung-RTTI-Zeitschlitzpaar und nachfolgenden Aufwärtsverbindung-RTTI-Zeitschlitzpaaren und Empfangen des BTTI-Funkblocks in nachfolgenden Aufwärtsverbindung-BTTI-Zeitschlitzen mit Sequenznummern größer als die des Zeitschlitzes mit der niedrigeren Sequenznummer in dem korrespondierenden Aufwärtsverbindung-RTTI-Zeitschlitzpaar, wobei der RTTI-Funkblock in den letzten 10 ms der nächsten 20 ms einer gegenwärtigen Periode gesandt wird, wenn die BTTI-USF empfangen wird, und der BTTI-Funkblock in den nächsten 20 ms der gegenwärtigen Periode gesandt wird.

## Revendications

1. Procédé de planification de ressources de liaison montante, comprenant les étapes suivantes :
recevoir (11) des informations d'attribution de ressources de flux de bloc temporaire (TBF) unique de liaison montante envoyées par un côté réseau, où les informations d'attribution de ressources de TBF unique de liaison montante comprennent des informations d'un intervalle de temps de liaison montante attribué par le côté réseau à une station mobile, et un indicateur d'état de liaison montante (USF) correspondant à l'intervalle de temps de liaison montante, et les informations de l'intervalle de temps de liaison montante comprennent des informations d'au moins une paire d'intervalles de temps d'un intervalle de temps de transmission réduit, RTTI, de liaison montante et des informations d'au moins un intervalle de temps d'un intervalle de temps de transmission basique, BTTI, de liaison montante ; et
envoyer (12) au moins un bloc radio parmi un bloc radio BTTI de liaison montante et un bloc radio RTTI de liaison montante sur l'intervalle de temps de liaison montante correspondant à l'USF détecté, ou sur tout ou partie des intervalles de temps de liaison montante avec des numéros de séquence égaux ou supérieurs à celui de l'intervalle de temps de liaison montante correspondant, lorsque l'USF est détecté sur un intervalle de temps de liaison descendante correspondant à l'intervalle de temps de liaison montante ;
où l'intervalle de temps de liaison descendante est un intervalle de temps de BTTI de liaison descendante correspondant à l'intervalle de temps de BTTI de liaison montante ; un type de l'USF comprend un USF de BTTI ; un USF de BTTI correspond à une paire d'intervalles de temps de RTTI de liaison montante ou à un intervalle de temps de BTTI de liaison montante ;
où la surveillance de l'USF sur l'intervalle de temps de liaison descendante correspondant à l'intervalle de temps de liaison montante comprend l'étape suivante : surveiller l'USF de BTTI sur un intervalle de temps de BTTI de liaison descendante correspondant à l'intervalle de temps de BTTI de liaison montante ; et
**caractérisé en ce que** l'envoi de l'au moins un bloc radio parmi le bloc radio BTTI de liaison montante et le bloc radio RTTI de liaison montante sur tout ou partie des intervalles de temps de liaison montante avec des numéros de séquence égaux ou supérieurs à celui de l'intervalle de temps de liaison montante correspondant lorsque l'USF est détecté sur l'intervalle de temps de liaison descendante correspondant à l'intervalle de temps de liaison montante comprend les étapes suivantes :
si l'USF de BTTI est détecté sur l'intervalle de temps de BTTI de liaison descendante correspondant à l'intervalle de temps de BTTI de liaison montante, envoyer le bloc radio BTTI sur l'intervalle de temps de BTTI de liaison montante correspondant à l'USF de BTTI détecté et sur les intervalles de temps de BTTI de liaison montante subséquents et envoyer le bloc radio RTTI sur une paire d'intervalles de temps de RTTI de liaison montante avec un numéro de séquence supérieur à celui de l'intervalle de temps de BTTI de liaison montante correspondant, où le bloc radio BTTI et le bloc radio RTTI sont envoyés dans les 20 ms suivantes d'une période en cours lorsque l'USF de BTTI est reçu,
où l'envoi de l'au moins un bloc radio parmi le bloc radio BTTI de liaison montante et le bloc radio RTTI de liaison montante sur tout ou partie des intervalles de temps de liaison montante avec des numéros de séquence égaux ou supérieurs à celui de l'intervalle de temps de liaison montante correspondant lorsque l'USF est détecté sur l'intervalle de temps de liaison descendante correspondant à l'intervalle de temps de liaison montante comprend au moins l'une des étapes suivantes :
si l'USF de BTTI est détecté sur l'intervalle de temps avec le numéro de séquence inférieur dans la paire d'intervalles de temps de RTTI de liaison descendante correspondant à la paire d'intervalles de temps de RTTI de liaison montante, envoyer le bloc radio RTTI sur la paire d'intervalles de temps de RTTI de liaison montante correspondant à l'USF de BTTI détecté et sur des paires d'intervalles de temps de RTTI de liaison montante subséquentes, et
envoyer le bloc radio BTTI sur des intervalles de temps de BTTI de liaison montante subséquents avec des numéros de séquence supérieurs à celui de l'intervalle de temps avec le numéro de séquence inférieur dans la paire d'intervalles de temps de RTTI de liaison montante correspondante, où le bloc radio RTTI est envoyé dans les 10 premières ms des 20 ms suivantes d'une période en cours lorsque l'USF de BTTI est reçu, et le bloc radio BTTI est envoyé dans les 20 ms suivantes de la période en cours ; et
si l'USF de BTTI est détecté sur l'intervalle de temps avec le numéro de séquence supérieur dans la paire d'intervalles de temps de RTTI de liaison descendante correspondant à la paire d'intervalles de temps de RTTI de liaison montante, envoyer le bloc radio RTTI sur la paire d'intervalles de temps de RTTI de liaison montante correspondant à l'USF de BTTI détecté et sur des paires d'intervalles de temps de RTTI de liaison montante subséquentes, et
envoyer le bloc radio BTTI sur des intervalles de temps de BTTI de liaison montante subséquents avec des numéros de séquence supérieurs à celui de l'intervalle de temps avec le numéro de séquence inférieur dans la paire d'intervalles de temps de RTTI de liaison montante correspondante, où le bloc radio RTTI est envoyé dans les 10 dernières ms des 20 ms suivantes d'une période en cours lorsque l'USF de BTTI est reçu, et le bloc radio BTTI est envoyé dans les 20 ms suivantes de la période en cours.

2. Procédé de planification de ressources de liaison montante, comprenant les étapes suivantes :
générer (31) des informations d'attribution de ressources de flux de bloc temporaire (TBF) unique de liaison montante et envoyer les informations d'attribution de ressources de TBF unique de liaison montante à une station mobile, où les informations d'attribution de ressources de TBF unique de liaison montante comprennent des informations concernant un intervalle de temps de liaison montante attribué par un côté réseau à la station mobile, et un indicateur d'état de liaison montante, USF, correspondant à l'intervalle de temps de liaison montante, et les informations concernant l'intervalle de temps de liaison montante comprennent des informations concernant au moins une paire d'intervalles de temps d'un intervalle de temps de transmission réduit, RTTI, de liaison montante et des informations concernant au moins un intervalle de temps d'un intervalle de temps de transmission basique, BTTI, de liaison montante ; et
envoyer (32) l'USF sur un intervalle de temps de liaison descendante correspondant à l'intervalle de temps de liaison montante, de manière à notifier à la station mobile d'envoyer au moins un bloc radio parmi un bloc radio BTTI de liaison montante et un bloc radio RTTI de liaison montante sur l'intervalle de temps de liaison montante correspondant à l'USF détecté, ou sur tout ou partie d'intervalles de temps de liaison montante avec des numéros de séquence égaux ou supérieurs à celui de l'intervalle de temps de liaison montante correspondant, lorsque l'USF est détecté sur l'intervalle de temps de liaison descendante correspondant à l'intervalle de temps de liaison montante ;
où l'intervalle de temps de liaison descendante est un intervalle de temps de BTTI de liaison descendante correspondant à l'intervalle de temps de BTTI de liaison montante ; un type de l'USF comprend un USF de BTTI ; un USF de BTTI correspond à une paire d'intervalles de temps de RTTI de liaison montante ou à un intervalle de temps de BTTI de liaison montante ;
où l'envoi de l'USF sur l'intervalle de temps de liaison descendante correspondant à l'intervalle de temps de liaison montante comprend l'étape suivante : envoyer l'USF de BTTI sur un intervalle de temps de BTTI de liaison descendante correspondant à l'intervalle de temps de BTTI de liaison montante ; et
**caractérisé en ce que** le procédé comprend en outre les étapes suivantes :
si l'USF de BTTI est détecté sur l'intervalle de temps de BTTI de liaison descendante correspondant à l'intervalle de temps de BTTI de liaison montante, recevoir le bloc radio BTTI sur l'intervalle de temps de BTTI de liaison montante correspondant à l'USF de BTTI détecté et sur des intervalles de temps de BTTI de liaison montante subséquents et recevoir le bloc radio RTTI sur une paire d'intervalles de temps de RTTI de liaison montante avec un numéro de séquence supérieur à celui de l'intervalle de temps de BTTI de liaison montante correspondant, où le bloc radio BTTI et le bloc radio RTTI sont envoyés dans les 20 ms suivantes d'une période en cours lorsque l'USF de BTTI est reçu par la station mobile,
où le procédé comprend en outre au moins une des étapes suivantes :
si l'USF de BTTI est détecté sur l'intervalle de temps avec le numéro de séquence inférieur dans la paire d'intervalles de temps de RTTI de liaison descendante correspondant à la paire d'intervalles de temps de RTTI de liaison montante, recevoir le bloc radio RTTI sur la paire d'intervalles de temps de RTTI de liaison montante correspondant à l'USF de BTTI détecté et sur des paires d'intervalles de temps de RTTI de liaison montante subséquentes, et
recevoir le bloc radio BTTI sur des intervalles de temps de BTTI de liaison montante subséquents avec des numéros de séquence supérieurs à celui de l'intervalle de temps avec le numéro de séquence inférieur dans la paire d'intervalles de temps de RTTI de liaison montante correspondante, où le bloc radio RTTI est envoyé dans les 10 premières ms des 20 ms suivantes d'une période en cours lorsque l'USF de BTTI est reçu, et le bloc radio BTTI est envoyé dans les 20 ms suivantes de la période en cours ; et
si l'USF de BTTI est détecté sur l'intervalle de temps avec le numéro de séquence supérieur dans la paire d'intervalles de temps de RTTI de liaison descendante correspondant à la paire d'intervalles de temps de RTTI de liaison montante, recevoir le bloc radio RTTI sur la paire d'intervalles de temps de RTTI de liaison montante correspondant à l'USF de BTTI détecté et sur des paires d'intervalles de temps de RTTI de liaison montante subséquentes, et
recevoir le bloc radio BTTI sur des intervalles de temps de BTTI de liaison montante subséquents avec des numéros de séquence supérieurs à celui de l'intervalle de temps avec le numéro de séquence inférieur dans la paire d'intervalles de temps de RTTI de liaison montante correspondante, où le bloc radio RTTI est envoyé dans les 10 dernières ms des 20 ms suivantes d'une période en cours lorsque l'USF de BTTI est reçu, et le bloc radio BTTI est envoyé dans les 20 ms suivantes de la période en cours.

3. Station mobile comprenant :
un module de réception d'informations d'attribution (151), configuré pour recevoir des informations d'attribution de ressources de flux de bloc temporaire (TBF) unique de liaison montante envoyées par un côté réseau, où les informations d'attribution de ressources de TBF unique de liaison montante comprennent des informations concernant un intervalle de temps de liaison montante attribué par le côté réseau à la station mobile et un indicateur d'état de liaison montante, USF, correspondant à l'intervalle de temps de liaison montante,
et les informations concernant l'intervalle de temps de liaison montante comprennent des informations concernant au moins une paire d'intervalles de temps d'un intervalle de temps de transmission réduit, RTTI, de liaison montante et des informations d'au moins un intervalle de temps d'un intervalle de temps de transmission basique, BTTI, de liaison montante ; et
un module de traitement (152), configuré pour envoyer au moins un bloc radio parmi un bloc radio BTTI de liaison montante et un bloc radio RTTI de liaison montante sur l'intervalle de temps de liaison montante correspondant à l'USF détecté, ou sur tout ou partie d'intervalles de temps de liaison montante avec des numéros de séquence égaux ou supérieurs à celui de l'intervalle de temps de liaison montante correspondant lorsque l'USF est détecté sur un intervalle de temps de liaison descendante correspondant à l'intervalle de temps de liaison montante ;
où l'intervalle de temps de liaison descendante est un intervalle de temps de BTTI de liaison descendante correspondant à l'intervalle de temps de BTTI de liaison montante ; un type de l'USF comprend un USF de BTTI ; un USF de BTTI correspond à une paire d'intervalles de temps de RTTI de liaison montante ou à un intervalle de temps de BTTI de liaison montante ;
où le module de traitement (152) est en outre configuré pour surveiller l'USF de BTTI sur un intervalle de temps de BTTI de liaison descendante correspondant à l'intervalle de temps de BTTI de liaison montante ; et
**caractérisée en ce que** le module de traitement (152) est en outre configuré pour, si l'USF de BTTI est détecté sur l'intervalle de temps de BTTI de liaison descendante correspondant à l'intervalle de temps de BTTI de liaison montante, envoyer le bloc radio BTTI sur l'intervalle de temps de BTTI de liaison montante correspondant à l'USF de BTTI détecté et
sur des intervalles de temps de BTTI de liaison montante subséquents et envoyer le bloc radio RTTI sur une paire d'intervalles de temps de RTTI de liaison montante avec un numéro de séquence supérieur à celui de l'intervalle de temps de BTTI de liaison montante correspondant, où le bloc radio BTTI et le bloc radio RTTI sont envoyés dans les 20 ms suivantes d'une période en cours lorsque l'USF de BTTI est reçu,
où le module de traitement (152) est en outre configuré pour effectuer au moins une des étapes suivantes :
si l'USF de BTTI est détecté sur l'intervalle de temps avec le numéro de séquence inférieur dans la paire d'intervalles de temps de RTTI de liaison descendante correspondant à la paire d'intervalles de temps de RTTI de liaison montante, envoyer le bloc radio RTTI sur la paire d'intervalles de temps de RTTI de liaison montante correspondant à l'USF de BTTI détecté et sur des paires d'intervalles de temps de RTTI de liaison montante subséquentes, et envoyer le bloc radio BTTI sur des intervalles de temps de BTTI de liaison montante subséquents avec des numéros de séquence supérieurs à celui de l'intervalle de temps avec le numéro de séquence inférieur dans la paire d'intervalles de temps de RTTI de liaison montante correspondante, où le bloc radio RTTI est envoyé dans les 10 premières ms des 20 ms suivantes d'une période en cours lorsque l'USF de BTTI est reçu, et le bloc radio BTTI est envoyé dans les 20 ms suivantes de la période en cours ; et
si l'USF de BTTI est détecté sur l'intervalle de temps avec le numéro de séquence supérieur dans la paire d'intervalles de temps de RTTI de liaison descendante correspondant à la paire d'intervalles de temps de RTTI de liaison montante, envoyer le bloc radio RTTI sur la paire d'intervalles de temps de RTTI de liaison montante correspondant à l'USF de BTTI détecté et sur des paires d'intervalles de temps de RTTI de liaison montante subséquentes, et envoyer le bloc radio BTTI sur des intervalles de temps de BTTI de liaison montante subséquents avec des numéros de séquence supérieurs à celui de l'intervalle de temps avec le numéro de séquence inférieur dans la paire d'intervalles de temps de RTTI de liaison montante correspondante, où le bloc radio RTTI est envoyé dans les 10 dernières ms des 20 ms suivantes d'une période en cours lorsque l'USF de BTTI est reçu, et le bloc radio BTTI est envoyé dans les 20 ms suivantes de la période en cours.

4. Équipement de côté réseau, comprenant :
un module d'envoi et de génération d'informations d'attribution (161), configuré pour générer des informations d'attribution de ressources de flux de bloc temporaire (TBF) unique de liaison montante et envoyer les informations d'attribution de ressources de TBF unique de liaison montante à une station mobile, où les informations d'attribution de ressources de TBF unique de liaison montante comprennent des informations concernant un intervalle de temps de liaison montante attribué par un côté réseau à la station mobile, et un indicateur d'état de liaison montante, USF, correspondant à l'intervalle de temps de liaison montante, et les informations concernant l'intervalle de temps de liaison montante comprennent des informations concernant au moins une paire d'intervalles de temps d'un intervalle de temps de transmission réduit, RTTI, de liaison montante et des informations concernant au moins un intervalle de temps d'un intervalle de temps de transmission basique, BTTI, de liaison montante ; et
un module de planification (162), configuré pour envoyer l'USF sur un intervalle de temps de liaison descendante correspondant à l'intervalle de temps de liaison montante, de manière à notifier à la station mobile d'envoyer au moins un bloc radio parmi un bloc radio BTTI de liaison montante et un bloc radio RTTI de liaison montante sur l'intervalle de temps de liaison montante correspondant à l'USF détecté, ou sur tout ou partie d'intervalles de temps de liaison montante avec des numéros de séquence égaux ou supérieurs à celui de l'intervalle de temps de liaison montante correspondant, lorsque l'USF est détecté sur l'intervalle de temps de liaison descendante correspondant à l'intervalle de temps de liaison montante ;
où l'intervalle de temps de liaison descendante est un intervalle de temps de BTTI de liaison descendante correspondant à l'intervalle de temps de BTTI de liaison montante ; un type de l'USF comprend un USF de BTTI ; un USF de BTTI correspond à une paire d'intervalles de temps de RTTI de liaison montante ou un intervalle de temps de BTTI de liaison montante;
où le module de planification (162) est en outre configuré pour envoyer l'USF de BTTI sur un intervalle de temps de BTTI de liaison descendante correspondant à l'intervalle de temps de BTTI de liaison montante ;
**caractérisé en ce que** le module de planification (162) est en outre configuré pour, si l'USF de BTTI est détecté sur l'intervalle de temps de BTTI de liaison descendante correspondant à l'intervalle de temps de BTTI de liaison montante, recevoir le bloc radio BTTI sur l'intervalle de temps de BTTI de liaison montante correspondant à l'USF de BTTI détecté et sur des intervalles de temps de BTTI de liaison montante subséquents et recevoir le bloc radio RTTI sur une paire d'intervalles de temps de RTTI de liaison montante avec un numéro de séquence supérieur à celui de l'intervalle de temps de BTTI de liaison montante correspondant, où le bloc radio BTTI et le bloc radio RTTI sont envoyés dans les 20 ms suivantes d'une période en cours lorsque l'USF de BTTI est reçu par la station mobile,
où le module de planification (162) est en outre configuré pour effectuer au moins une des étapes suivantes :
si l'USF de BTTI est détecté sur l'intervalle de temps avec le numéro de séquence inférieur dans la paire d'intervalles de temps de RTTI de liaison descendante correspondant à la paire d'intervalles de temps de RTTI de liaison montante, recevoir le bloc radio RTTI sur la paire d'intervalles de temps de RTTI de liaison montante correspondant à l'USF de BTTI détecté et sur des paires d'intervalles de temps de RTTI de liaison montante subséquentes, et recevoir le bloc radio BTTI sur des intervalles de temps de BTTI de liaison montante subséquents avec des numéros de séquence supérieurs à celui de l'intervalle de temps avec le numéro de séquence inférieur dans la paire d'intervalles de temps de RTTI de liaison montante correspondante, où le bloc radio RTTI est envoyé dans les 10 premières ms des 20 ms suivantes d'une période en cours lorsque l'USF de BTTI est reçu, et le bloc radio BTTI est envoyé dans les 20 ms suivantes de la période en cours ; et
si l'USF de BTTI est détecté sur l'intervalle de temps avec le numéro de séquence supérieur dans la paire d'intervalles de temps de RTTI de liaison descendante correspondant à la paire d'intervalles de temps de RTTI de liaison montante, recevoir le bloc radio RTTI sur la paire d'intervalles de temps de RTTI de liaison montante correspondant à l'USF de BTTI détecté et sur des paires d'intervalles de temps de RTTI de liaison montante subséquentes, et recevoir le bloc radio BTTI sur des intervalles de temps de BTTI de liaison montante subséquents avec des numéros de séquence supérieurs à celui de l'intervalle de temps avec le numéro de séquence inférieur dans la paire d'intervalles de temps de RTTI de liaison montante correspondante, où le bloc radio RTTI est envoyé dans les 10 dernières ms des 20 ms suivantes d'une période en cours lorsque l'USF de BTTI est reçu, et le bloc radio BTTI est envoyé dans les 20 ms suivantes de la période en cours.
